# EUROPEAN PATENT SPECIFICATION

(11) **EP 2 735 207 B1**
(45) Date of publication and mention of the grant of the patent: **20.05.2015**
(21) Application number: 12741446.4
(22) Date of filing: 20.07.2012
(51) Int. Cl.: H04W 76/00, H04W 4/08

(54) **METHOD AND APPARATUS FOR MULTIPLE PERSONALITY SUPPORT AND DYNAMIC PERSONALITY SELECTION**
VERFAHREN UND VORRICHTUNG FÜR MULTIPLE PERSÖNLICHKEITSUNTERSTÜTZUNG UND DYNAMISCHE PERSÖNLICHKEITSAUSWAHL
PROCÉDÉ ET APPAREIL DE SUPPORT DE PERSONNALITÉS MULTIPLES ET DE SÉLECTION DE PERSONNALITÉ DYNAMIQUE

(30) Priority: 22.07.2011 US 201161511019 P; 19.07.2012 US 201213553549
(43) Date of publication of application: 28.05.2014
(73) Proprietor: Qualcomm Incorporated, San Diego, CA 92121 (US)
(72) Inventor: SHUMAN, Mohammed, Ataur, R., San Diego, California 92121 (US); SHARMA, Sandeep, San Diego, California 92121 (US); GOEL, Amit, San Diego, California 92121 (US)
(74) Representative: O'Neill, Aoife
(86) International application number: PCT/US2012/047674
(87) International publication number: WO 2013/016218

(56) References cited:
- EP-A1- 2 068 534
- US-A1- 2004 249 846
- US-A1- 2010 234 057
- US-A1- 2011 154 446

## Description

### BACKGROUND

The described aspects relate to communications, and more particularly to methods and apparatus for establishing and utilizing multiple personalities in group communications.

Communication devices and mobile operating systems provide users with a variety of communication modes, such as social networking, micro blogging, instant messaging, rich media communication applications for voice notes, video calling, etc. Users often wish to identify themselves with different user profiles based on, for example, the type of application in use, with whom the user is communicating, the context of the communication, etc.

In order to present different profiles that represent different personalities of a user: a) users typically create different accounts with associated profiles on different applications; b) create multiple accounts with different profiles for the same application and use the appropriate application or identity for the same application; or c) create one account with an associated profile and control the visibility of the profile by creating lists indicating which parts of the profile are visible to whom. Alternatively, or in addition, to present different profiles a user may need to manage an address book for different accounts of the same application, or for different applications. Managing these multiple accounts and/or address books is cumbersome.

Therefore, improvements in profile management and selection are desired.

US patent application US 2010/234057 describes a method and device for enabling selective privacy in a push to talk (PTT) wireless group communication session providing improved control over sharing of user identity information. The method includes processing at a PTT server a request for selective privacy. The PTT server then processes one or more selective privacy parameters, whereby at least a first session participant is enabled to receive an identification of a second session participant and a third session participant is not enabled to receive an identification of the second session participant. The PTT server then facilitates the PTT wireless group communication session between at least the first session participant, second session participant, and third session participant according to the one or more selective privacy parameters.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect, a method of establishing a group communication session includes receiving a request from an originator to initiate a group communication session, where the request identifies a plurality of participants. Further, the method includes selecting a respective originator profile from a plurality of different established originator profiles to be displayed to each of the plurality of participants, where each of the plurality of different established originator profiles is associated with a single user account. Additionally, a first selected originator profile to be displayed to a first one of the plurality of participants differs from a second selected originator profile to be displayed to a second one of the plurality of participants.

Additional related aspects may include one or more of: at least one processor including one or more modules for performing the actions of the method; a computer program including a computer readable medium having at least one instruction for performing the actions of the method; an apparatus including one or more means for performing the actions of the method; and a group communications server including one or more components, such as a group communication manager, a profile determiner, and a profile manager, for performing the actions of the method.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a schematic diagram of one aspect of a system for establishing and utilizing multiple personalities in group communications;
Figs. 2A and 2B are schematic diagrams of aspects of managing multiple profiles defining different personalities associated with a user account;
Fig. 3 is a schematic diagram of one aspect of a group communication session where at least one group participant is represented by at least a first personality to one other group participant and by a different, second personality to another group participant;
Figs. 4A and 4B are message flow diagrams of one aspect of establishment and use of a plurality of profiles defining different personalities for one or more users in a group communication system;
Figs. 5 and 6 are schematic diagrams of one aspect of contact-based management of one or more user profiles;
Figs. 7 and 8 are schematic diagrams of one aspect of application-based management of one or more user profiles;
Figs. 9 and 10 are schematic diagrams of one aspect of user managed profile selection of a profile to present to another user;
Fig. 11 and 12 are schematic diagrams of one aspect of dynamic, in-communication user managed profile selection of a profile to present to another user who has joined a group communication session in process;
Fig. 13 is a message flow diagram of one aspect of establishment and use of a plurality of profiles defining different personalities for one or more users in a group communication system, in particular relating to multiple profile storage and selection at a group communication server;
Fig. 14 is a schematic diagram of one aspect of establishment of a group communication session with multiple profile selection and usage;
Fig. 15 is a schematic diagram of one aspect of creation of a hybrid profile for one user by another user;
Fig. 16 is a schematic diagram of one aspect of selection and usage of the hybrid profile of Fig. 15;
Fig. 17 is a schematic diagram of one aspect of a computer device for use in the system of Fig. 1; and
Fig. 18 is a flowchart of one aspect of a method of establishing a group communication session using multiple profiles defining different personalities.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

In an aspect, the described apparatus and methods enable a user to create one account with a common platform, e.g. a group communication server, an application, or a group of applications, with the option of creating and defining multiple profiles to represent different personalities of the user. As used herein, the term "platform" may include a network-based server platform, such as a group communications server or social networking server or some other communication platform, and also a device-based platform, such as an application, group of applications or a client platform or middleware hosting multiple applications, or a combination of both the network-based platform and the device-based platform that define a client/server communication framework. In an aspect, for example, in the combination of both the network-based platform and the device-based platform, the functionalities described herein, e.g. defining profiles, storing/indexing profiles, aggregation of profile data from various sources including third party interfaces, rule based profile selection, etc., may be distributed among the client device and the server. In short, the described apparatus and methods can have multiple variants. Further, the terms "profile" and "personality" may be used interchangeably herein, as a profile may define a user personality or as a user personality may define a profile. It is noted that a profile is not only name, avatar and/or identifier of the user, but may include any number of other parameters such as, but not limited to, a name of the user, address information, presence information, text based status/activity, location information, a photograph, one or more interests, etc. Further, the described apparatus and methods enable a user to create a set of rules for the platform so that the platform can dynamically choose the "right" or most appropriate profile for the user based on the application in use, participants in a group communication session, context (location, time of the day, etc.), etc. Group communications may include any communication with multiple parties. For example, group communication sessions may include, but are not limited to, a group call, a game, a chat session, social networking communications, video calling, and instant messaging, among others. Accordingly, in an aspect, the described apparatus and methods may relieve the user from the need to manage multiple accounts manually. Instead, the described apparatus and methods may be able communicate with a preferred profile automatically based on user preferences or defined profile selection rules.

Also, in one aspect, the described apparatus and methods may relate to profile management for group participants. In an aspect, the described apparatus and methods may enable an owner of the group, a given participant or any other authorized entity to dictate what profile information all the participants of the group member will see.

Further, in another aspect, the described apparatus and methods may enable different group participants to see either the same or different profiles of other participants based on the respective preferences of the other participants in the group communication session. For example, if participants A, B, C and D are in a group communication session(all of them having one or more profiles representing one or more personalities, e.g. A having profiles A1-A4, B having profiles B1-B3, C having profiles C1 and C2, and D having profile D1), then in one aspect participant C may be seeing a representation of users A, B and D based on profiles A4, B3, and D1, respectively, based on participant A, B, and D's preferences with respect to participant C. Also, in the same group communication session, participant B may have a different representation of one or more of the same participants, as participant B may be seeing a representation of user A, for example, based on profile A1 according to participant A's preference with respect to participant B. For instance, A may want participant B to see profile A1, whereas A may want participant C to see profile A4. In other words, each participant in a group communication session may separately identify a particular personality (e.g. based on a profile) to be presented to each other participant in the group communication session. Further, if a new participant is added to a group communication session in progress, then each existing participant, as well as the new member of the group communication session, can chose the respective profile to advertise to each other participant. Additionally, participants can also chose to switch advertised profiles while the group communication session is in progress.

In yet another aspect, a group itself may have a group profile identifier that controls what profile of each group participant is used. For example, based on the group profile identifier, participants in that group (and associated communications) may either see only the group name and/or respective profile information of each user based upon authority or security aspects of the group and group user profiles. For example, in some aspects, such as in a group communication session with security concerns, all the participants in a group communication session may only see the group name - no information about the participants may be available. In this case, a group owner or the group communication server or system can dictate when and whether participant information should be displayed or not. In another case, a group may have corresponding group parameters, such as location, name, active_since_time (defining a time period that measures when the when the group was last active), membership information, universal resource locator (URL), etc., that may be used to determine what profile information is presented. In this example, such a group profile determination may be pertinent in cases where the participant information does not need to be exposed and only the group parameters or other group information is noteworthy to everybody on the communication session, such as in an anonymous group communication session.

In other aspects, there may be a mix of what profile information is available. For example, some group participants may see a name and/or location information of another participant whereas a different participant may see only the group name and/or a profile user name corresponding to the same participant.

In other words, the described apparatus and methods support multiple personalities of a user, which allows the user to communicate with different personalities using a single account and address book. These aspects apply to both active communication such as making a group communication session, as well as to user or profile discovery, such as making the different profiles or personalities available for other users to find. Thus, the described apparatus and methods provide multiple personality support and dynamic personality management to achieve flexibility and efficiency in the presentation of personalities in a group communication environment.

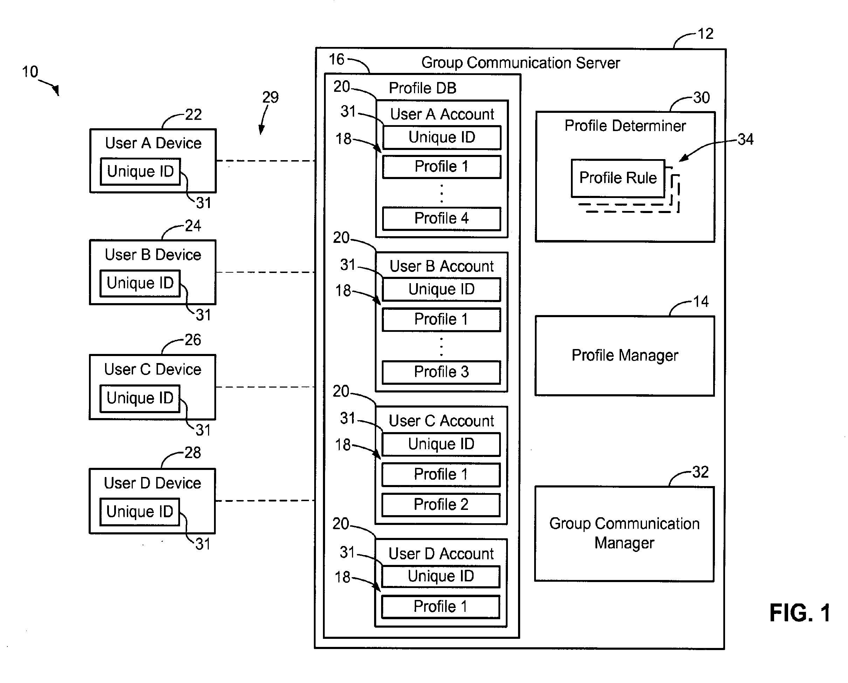

Referring to Fig. 1, in one example, a system 10 of managing profile information in group communications includes a group communication server 12 having a profile manager 14 that maintains a profile database 16. Profile database 16 stores a plurality of different established profiles 18 for a single user account 20 corresponding to each of a plurality of user devices, such as devices 22, 24, 26 and 28, operable with system 10. It should be noted that the respective device users, e.g., User A, User B, User C, and User D, may each have a plurality of user devices. The user devices may include, but are not limited to, cellular telephones, tablets, laptop computers, personal computers, etc. The plurality of user devices may establish, access, and/or utilize the same profile, or different profiles, among the profiles 18 associated with the user account 20. For example, a user may initially establish and use a profile via a cellular telephone, and may subsequently access and/or update the initial profile via a tablet device. In an aspect, the single user account 20 for a respective device user may be accessed by each of the plurality of devices associated with the respective device user. Moreover, each of the devices 22, 24, 26 and 28 may be able to communicate with group communication server 12 via one or more communication links 29, such as any combination of wired or wireless links. Further, for example, each single user account 20 may have a unique identifier 31, which may be used to uniquely identify the user account 20 that corresponds with respective device users, e.g. User A, User B, User C, and User D. The unique identifier 31 may also be used by each of the devices 22, 24, 26 and 28 to associate the user account 20 to the respective device. If a respective device user has a plurality of devices associated with the respective device user, each of the devices may use the unique identifier 31 to associate the user account 20 for the respective device user to each of the devices. Further, for example, as illustrated in Fig. 1 but which should not be construed as limiting, profile database 16 may include a plurality of single user accounts 20, such as "User A Account" for a User A, "User B Account" for a User B, "User C Account" for a User C, and "User D Account" for a User D. Additionally, each single user account 20 may have one or more profiles 18 that define a respective one or more personalities of the respective user, such as Profiles 1-4 in User A Account for User A, Profile 1-3 in User B Account for User B, Profiles 1 and 2 in User C Account for User C, and Profile 1 in User D Account for User D. For instance, the personality defined by each of the plurality of different established profiles 18 may correspond to a contact or communication application or context in which each user may want to represent themselves differently. In addition, the personality defined by each of the plurality of different established profiles 18 may correspond to a particular device that the device user may be using to communicate with other device users.

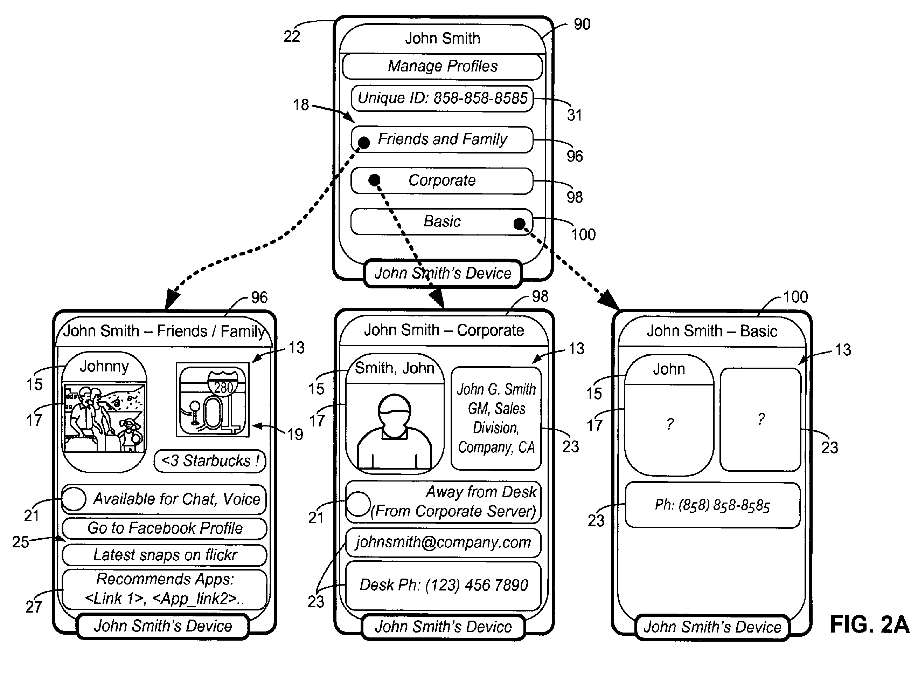

Referring to Fig. 2A, for example, in an aspect, user A operating device 22 of Fig. 1 may be a user having a username of "John Smith" and a unique identifier 31, such as a phone number, e.g. "858-858-8585." Further, unique identifier 31 for user A or "John Smith" may be associated with plurality of profiles 18 (in Fig. 1, indicated as profiles 1-4, also referred to as profiles A1-A4), which in one aspect may include a friends and family profile 96, a corporate profile 98, and a basic profile 100. For example, friends and family profile 96 may include more personal information than corporate profile 98, which may include more business-related information. Further, for example, basic profile 100 may include a relatively low level of information, e.g. such as information that a user is comfortable exposing to another user who is not known. It should be understood that friends and family profile 96, a corporate profile 98, and a basic profile 100 represent just one example of the plurality of profiles 18 that may be created by any one user. As such, user A or "John Smith" may create any number of profiles 18 corresponding to any number of personalities that "John Smith" may wish to use to represent himself. In this aspect, the described apparatus and methods may include a manage profiles user interface 90, such as on device 22, or any other communication device that allows any user, such as user A or "John Smith," to create the different profiles 18, such as friends and family profile 96, corporate profile 98, and basic profile 100, and to associate different profile parameters or profile information 13 with each profile. In an aspect, a user may access the manage profiles user interface 90 via, for example, an administrative web portal. For example, profile parameters or profile information 13 may define the personality that is represented to other users by the corresponding profile, and provide other user-related or profile-related data. For instance, profile parameters or profile information 13 may include, but are not limited to, data such as a profile-specific username 15, a profile-specific photo 17, location information 19, such as a current location or an address, presence information 21, such as user availability information or current mode of contact, contact information 23, such as an e-mail address, phone number, business title, business address, etc., additional user information, associations or interests 25, such as links to other user-related applications, and user recommendations 27, such as recommendations of goods, services, content, etc. As such, user A or "John Smith" may create and store each of the plurality of profiles 18 in profile database 16 (Fig. 1).

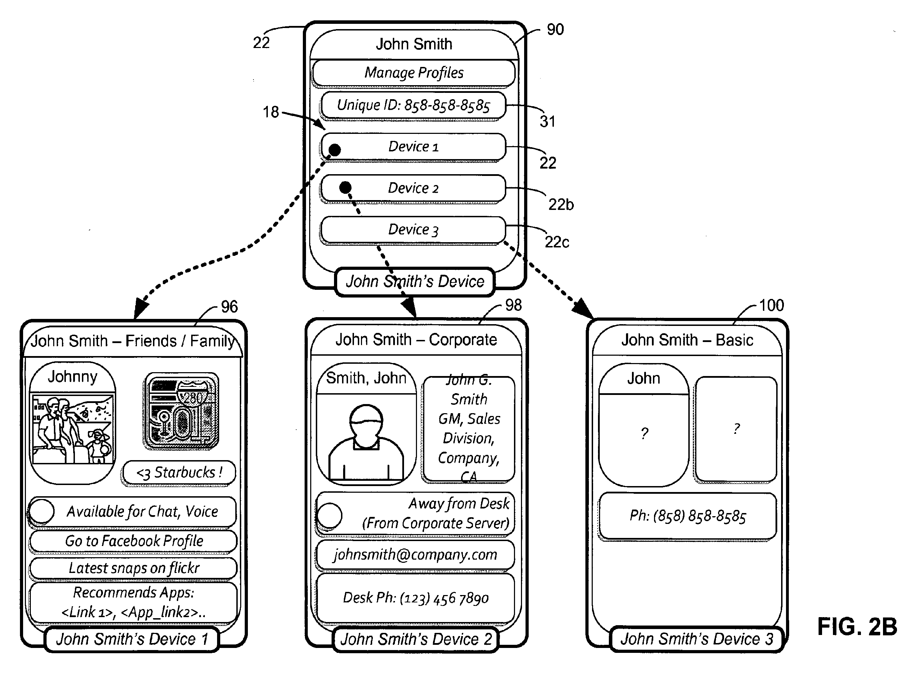

Referring to Fig. 2B, for example, in an aspect, user A operating device 22 of Fig. 1 may be a user having a username of "John Smith" and a unique identifier 31, such as a phone number, e.g. "858-858-8585." Further, unique identifier 31 for user A or "John Smith" may be associated with plurality of profiles 18 (in Fig. 1, indicated as profiles 1-4, also referred to as profiles A1-A4), which in one aspect may include a friends and family profile 96 (Fig. 2), a corporate profile 98 (Fig. 2), and a basic profile 100 (Fig. 2). In addition, user A may have a plurality of devices that user A may use for communication, which in one aspect may include a first device 22, a second device 22a, and a third device 22b. User A may use manager profiles user interface 90, such as on device 22, to create different profiles for each of the devices. It should be noted that users may create any number of profiles 18 corresponding to any number of personalities that the user may wish to use to represent themselves.

In an aspect, user A may wish to have different profiles 18 displayed for each device that user A may use. In an aspect, each device may have device identification (ID) that may be used to select a profile 18 to associate with the device. For example, user A may use device 22a as a work device and may want to have a corporate profile 98 presented when user A uses device 22a. In addition, user A may use device 22 as a personal device and may want to have a friends/family profile 96 presented on device 22. Device 22b may be used infrequently by user A for communication, and therefore, user A may want to have a basic profile 100 displayed on device 22b.

Devices 22, 22a, and 22b may have specific device capabilities that may allow different features of profile 18 to be displayed and/or that may restrict various features of profile 18 from being displayed. Thus, the profile 18 selected to be displayed on each device may also depend on the specific device capabilities of the device.

While the above illustrates different profiles 18 displayed on each device, it should be noted that the same profile 18 may be displayed on each device. Moreover, multiple devices may display the same profile 18, while other devices may display a different profile 18. A user may update and/or change the profiles 18 selected for each device by using, for example, the manage profiles user interface 90.

Returning to Fig. 1, group communication server 12 may further include a profile determiner 30 in communication with a group communication manager 32 and each of the plurality of user devices 22, 24, 26 and 28. Group communication manager 32 controls establishment and maintenance of group communication sessions between any combination of the plurality of user devices, such as two or more of devices 22, 24, 26 and 28. Prior to establishment, and/or during an ongoing group communication session, profile determiner 30 identifies which one of the plurality of different established profiles 18 for each group participant is displayed to each of the other group participants. Thus, during a given group communication session and for each group participant, profile determiner 30 may identify different ones of the plurality of different established profiles 18 to be displayed to at least two different participants for the same user or user device.

For example, each of the plurality of different established profiles 18 for each user account 20 may relate to a different personality associated with the respective user corresponding to each user account 20, which may be associated, for example, with different user-defined categories. For instance, the plurality of different established profiles 18 for each user account 20 may include, but are not limited to, personalities such as a corporate personality, a family personality, a friend's personality, a group personality, an introductory or basic personality, etc. In an aspect, an identifier of each profile, such as a name, title or context, may be a user-defined category. As such, each of the plurality of different established profiles 18 for each user account 20 may include, or may expose, different profile-related information, such as but not limited to a user name and/or identifier, an address, presence information, text-based status or activity information, location information, interest(s), etc. For example, in an aspect, rather than having separate profiles with separate profile-related information, profile database 16 may be a relational database that maps different sets of profile-related information to different profile identifiers. In any case, system 10 includes a single user account 20 for each user or each user device, e.g. devices 22, 24, 26 and 28, and single user account 20 may include any number of different established profiles 18 that may be used to represent the user or user device in group communications.

In an aspect, profile determiner 30 may receive a user selection to designate which of the plurality of established profiles 18 is to be used in a given group communication session. For example, during group communication session setup, during an ongoing group communication session, or when a new group participant joins an ongoing group communication session, profile determiner 30 may prompt a user device to obtain a user input to identify which of the plurality of established profiles 18 is to be used.

In another aspect, profile determiner 30 may include one or more profile selection rules 34 that may be executed to automatically select which of the plurality of established profiles 18 is to be used in a given group communication session. For example, during group communication session setup, during an ongoing group communication session, or when a new group participant joins an ongoing group communication session, profile determiner 30 may execute one or more profile selection rules 34. In an aspect, profile selection rules 34 may be a set of rules specific to each user account 20, and may be defined by the corresponding user or learned by profile determiner 30 based on tracking profile usage in different scenarios or contexts. For instance, profile selection rules 34 may enable profile determiner 30 to make a decision as to which profile to select based on one or more factors, such as but not limited to, location information, time of day, calendar information, presence information, a user preference, group communication application in use, communication session originator information, user device capability, user device identification (e.g. a user may have more than one user device associated with single account 20), target participant device capability, target participant device capability, subject or title of the communication, context of the communication, or other participant information.

In an aspect, profile determiner 30 may use one or more profile selection rules 34 to select which profile 18 is to be used for the device the user is currently using for the group communication session. For example, the profile selection rule 34 may be set to use a friends and family profile based on the device identification of the device that is in use for the group communication session. The profile selection rules 34 may also automatically switch between profiles during the group communication session if the user changes devices during the group communication session. For example, if a user switches from a first device to a second device, the profile rules 34 may automatically switch from one profile associated with the first device to another profile associated with the second device upon receiving a notification that the user changed devices during the group communication session. A profile update notification may be sent to one of more of the participants in the given group communication session upon the profile switch occurring. When multiple devices are in use by a user in a group communication session, the profile visible to the one or more participants in the group communication session may be an aggregation of profiles enabled by one or more of the active devices in use for the unique ID of the user.

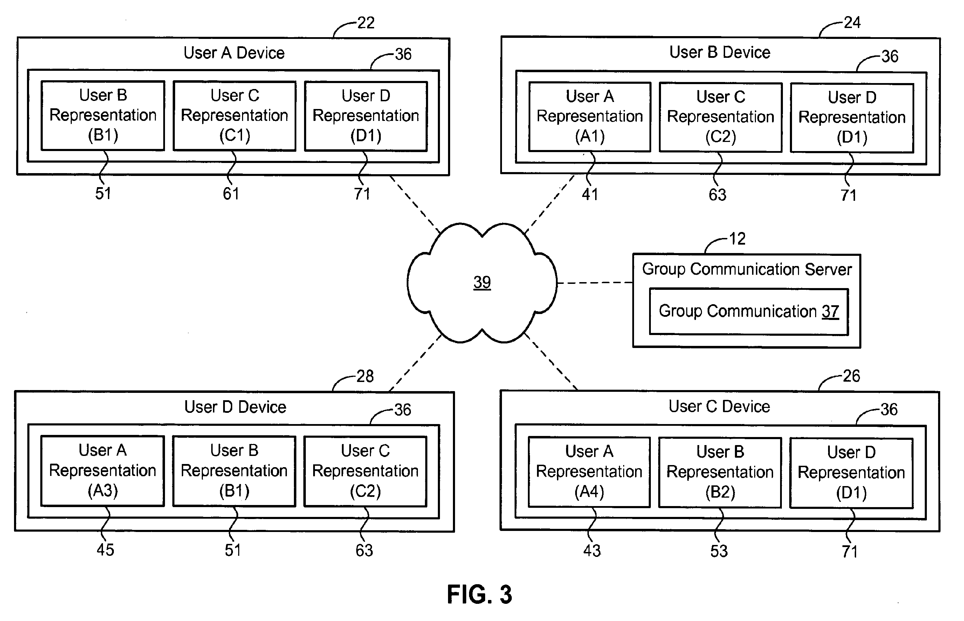

Referring to Fig. 3, for example, in one aspect that should not be construed as limiting, the result of the operation of system 10 (Fig. 1) enables a same user or user device to be represented differently to different other users or user devices during a group communication session 37 over a communications network 39, such as the Internet, which may include one or more of communication links 29 (Fig. 1). For instance, using the example of Fig. 1, each user account 20 corresponding to each of user devices 22, 24, 26 and 28 participating in a group communication session includes one or more different profiles 18, e.g. A1-A4, B1-B3, C1 and C2, and D1. As such, in Fig. 3, each user device 22, 24, 26 and 28 includes a user interface 36 that includes a respective representation of each of the other group participants based on one of their profiles. For example, user A may be presented on user device 24 as user A representation 41 based on user A profile 1, whereas user A representation 43 may be presented on user device 26 based on user A profile 2, and whereas user A representation 45 may be presented on user device 28 based on user A profile 3. Similarly, user B may be represented by user B representation 51 on user device 22 and user device 28 based on user B profile 1, whereas user B representation 51 is presented on user device 26 based on user B profile 3. Also, user C may be presented on user device 22 as user C representation 61 based on user C profile 1, and as user C representation 63 on user device 24 and user device 28 based on user C profile 2. Finally, user D may be presented as user D representation 71 on user device 22, user device 24, and user device 26 based on user D profile 1. Thus, each user or user device 22, 24, 26 and 28 in the group communication session may be differently represented to at least two of the group participants based on different ones of a plurality of profiles 18 associated with single user account 20 corresponding to each user or user device.

It should be noted that in the example of Fig. 3, user device 22 may be considered the communication session originator, while user devices 24, 26 and 28 may be targeted participants invited by the communication session originator to the group communication session. In the illustrated example of Fig. 3, the communication session originator, e.g. user device 22, has not defined a group profile identifier to control which group profile is presented during the group communication session. As such, profile determiner 30 (Fig. 1) may select an appropriate profile, e.g. based on one or more profile selection rules 34 associated with each user account, or each user may specify which profile to expose to the other users, or which profile to present on their own device. For example, via their respective user device, each user may identify their respective single user account 20 and/or unique identifier 31, such as via an automatic association based on originating the group communication session or being invited to the group communication session, or manually via a login process. Then, each user may select, e.g. manually or via a prompt by profile determiner 30 (Fig. 1), a profile to expose to the other users, or a profile to present on their own device.

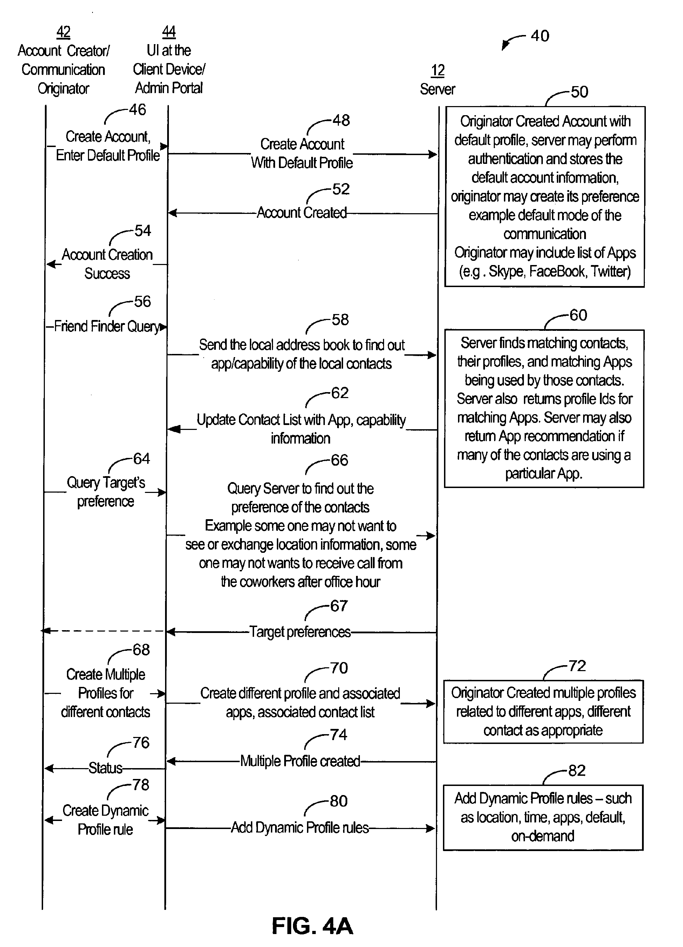

Referring to Fig. 4A, in an aspect, an example of a message flow 40 relating to profile creation and updates relates to actions of an account creator and/or communication session originator 42, a user interface (UI) 44, which may be located at any one of the user devices of the communication session originator and/or at another communication device capable of accessing an administrative web portal, and group communication server 12. In this example message flow 40, it should be noted that an account creator may be the user of a device associated with the user account that eventually originates a group communication session, e.g., a communication session originator, and/or eventually receives a group communication session. In addition, an account creator may be a separate party, such as an administrator or designated proxy, that sets up the account but whom does not originate communication sessions on the corresponding user device. At 46, for example upon an initial downloading or launching of a group communication session application on the user device or accessing administrative web portal, a create account message may prompt account creator and/or communication session originator 42 to enter basic profile information (e.g. if not already available and/or based on a user rule for that time/location/meeting/context/content, etc.) and requests, at 48, account creation including a basic profile. It should be noted that after an account has been created, launching of the group communication session application typically will not lead a user to an account creation action. At 50, group communication server 12 receives the request and basic profile information, optionally may authenticate account creator and/or communication session originator 42, and then may create and store a user account and the basic profile corresponding to account creator and/or communication session originator 42. Further, for example, group communication server 12 may obtain a list of applications, for example that may utilize one or more profiles, from account creator and/or communication session originator 42. For example, such group communication applications may include, but are not limited to, the QCHAT™ group communication application, the YAGATTA™ group communication application, the SKYPE™ group communication application, the FACEBOOK™ group communication application, the TWITTER™ group communication application, etc. For example, group communication server 12 may execute profile manager 14 to perform the interactions and may save the user account and the basic profile information in profile database 16. At 52, group communication server 12 transmits an account created message, and at 54 the successful account creation may be communicated to account creator and/or communication session originator 42 via UI 44.

At 56, UI 44 may present a friend finder query to prompt account creator and/or communication session originator 42 to interact with group communication server 12 to find user accounts of other users that may be contacts of or associated with account creator and/or communication session originator 42 and determine applications in use and/or capabilities of such users. At 58, in response, account creator and/or communication session originator 42 may initiate transmission of a local address book or some other set of personal information management data to group communication server 12. At 60, group communication server 12 finds matching contacts, their profiles, and applications being used by those contacts. At 62, group communication server 12 may return one or more user profiles for each user account corresponding to the applications, and UI 44 may notify account creator and/or communication session originator 42. Further, at 62, group communication server 12 may also return one or more application recommendations. For example, in one aspect, a single user account may include, as part of profile information 13, one or more profile elements named "recommended applications" and a user may provide a value, such as an application name or other identifier, as a value in this profile element. In another aspect, for example, group communication server 12 may include a recommendation determiner that can identify one or more recommended applications, for example, based on identifying a threshold number of users (or a subgroup of user, such as user-specific contacts) having a given application, or based on an amount of usage of a given application by a given number of users, etc. Accordingly, based on the message(s) received at 62, a contact list at the user device of or associated with account creator and/or communication session originator 42 is updated with the application capabilities associated with one or more contacts.

It should be noted that the actions associated with the friend finder query, at 56, 58, 60 and 62, advantageously enable a user of the described apparatus and methods to find a contact who has the plurality of different profiles 18, or personalities, based on knowledge of only a single one of the plurality of different profiles 18 or personalities. For example, user A of user device 22 (Fig. 1) may have a certain profile of user B of user device 24 (Fig. 1), e.g. profile B1, in a local address book of user device 22. Since user B has three profiles, e.g. profiles B1, B2 and B3, then group communication server 12 (Fig. 1) will be able to match a request searching for an identified one of user B and/or any of profiles B1-B3). Accordingly, user A can communicate with and obtain information relating to user B, optionally including information relating to profiles B2 and B3, based on knowledge of only a single profile, such as profile B1.

At 64, UI 44 may present account creator and/or communication session originator 42 with the option of querying a target group participant, such as one of the contacts in the contact list, for profile preferences. In response, at 66, account creator and/or communication session originator 42 initiates a target preference query that is transmitted to group communication server 12. In response, group communication server 12 may identify the preferences of the contacts, e.g., based on preference information stored in each user account. For example, preference information may include a preference as to whether or not the contact wants to see or exchange location information, times of day when a contact may or may not want to receive a communication from a coworkers, etc. At 67, the identified target group participant preferences can be updated for the corresponding contact in the contact list, optionally UI 44 may notify account creator and/or communication session originator 42.

At 68, UI 44 may present account creator and/or communication session originator 42 with the option of creating multiple profiles for different contacts. At 70, in response, account creator and/or communication session originator 42 may initiate an exchange with group communication server 12 to create different profiles, which may be associated with different applications and/or associated with different contacts in the contact list. At 72, any number of profiles may be stored by group communication server 12, for example, in profile database 16. At 74, group communication server 12 transmits a message confirming that multiple profiles have been created, and at 76 the status indicating the creating of multiple profiles is communicated to communication session originator via UI 44.

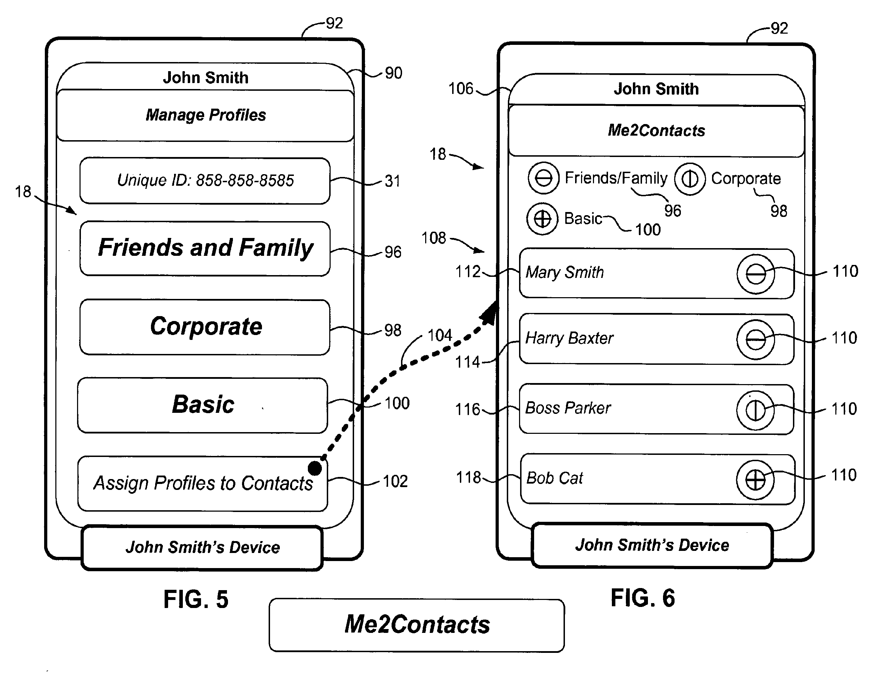

Referring to Figs. 5 and 6, for example, in one aspect of associating a profile with a contact, group communication server 12 or profile manager 14 may generate a manage profiles user interface 90 for display on client device or administrative portal 92 being used by a user, e.g. John Smith in this case. Manage profiles user interface 90 may include a unique identifier 31 associated with the user, which may identify the single user account of the user. Further, manage profiles user interface 90 may include different user profiles 18 associated with unique identifier 31. For example, in this case, different user profiles 18 may include, but are not limited to, a friends and family profile 96, a corporate profile 98, and a basic profile 100. Additionally, manage profiles user interface 90 may include an assign profiles to contacts tool 102 that, when selected by the user as indicated at 104, allows selected profiles to be associated with selected contacts. For example, referring to Fig. 6, an assign profiles to contacts user interface 106 identifies different user profiles 18 and one or more contacts 108, and provides a selection tool 110 for a user to indicate which profile to associate with each contact. For instance, in this case, one or more contacts 108 include Mary Smith 112, Harry Baxter 114, Boss Parker 116 and Bob Cat 118. Further, in this case, the respective selection tools 110 indicate that friends and family profile 96 is associated with Mary Smith 112 and Harry Baxter 114, corporate profile 98 is associated with Boss Parker 116, and basic profile 100 is associated with Bob Cat 118.

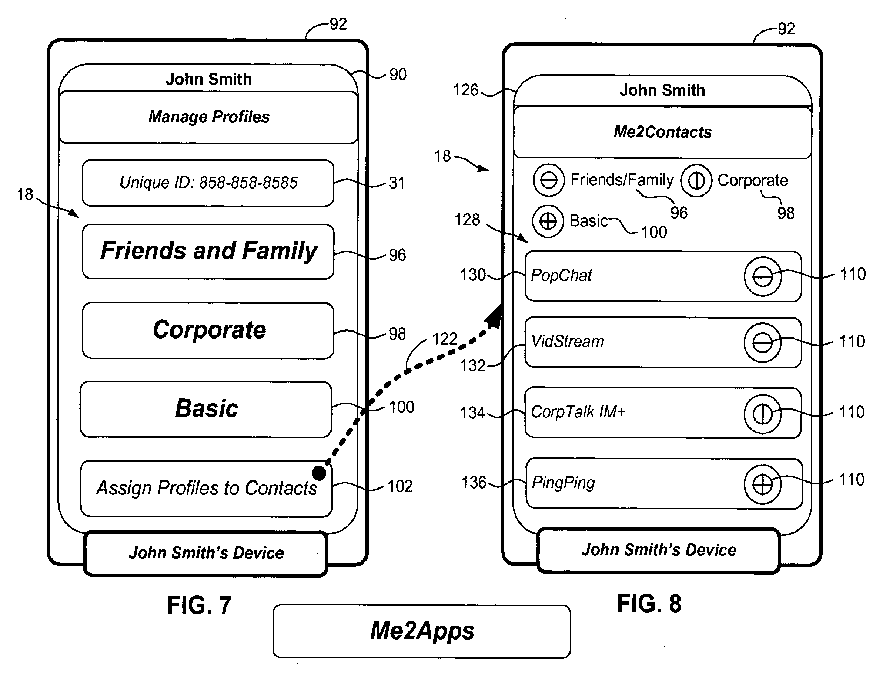

Referring to Figs. 7 and 8, for example, in one aspect of associating a profile with an application, manage profiles user interface 90 may include an assign profiles to applications tool 120 that, when selected by the user as indicated at 124, allows selected profiles to be associated with selected applications. It should be noted that assign profiles to applications tool 120 may be presented as an alternative to, or in addition to, assign profiles to contacts tool 102 (Fig. 5). For example, referring to Fig. 8, an assign profiles to applications user interface 126 identifies different user profiles 18 and one or more applications 128, and provides selection tool 110 for a user to indicate which profile to associate with each application. For instance, in this case, one or more applications 128 include POP CHAT application 130, VidStream application 132, CorpTalk IM+ application 134, and PingPing application 136. Further, in this case, the respective selection tools 110 indicate that friends and family profile 96 is associated with Pop Chat application 130 and VidStream application 132, corporate profile 98 is associated with CorpTalk IM+ application 134, and basic profile 100 is associated with PingPing application 136.

Returning to Fig. 4A, at 78, UI 44 may present a create dynamic profile rule prompt to communication session originator. At 80, in response, account creator and/or communication session originator 42 may exchange communications with group communication server 12 to add or modify one or more profile selection rules 34 (Fig. 1) to be used with the user account of or associated with account creator and/or communication session originator 42. At 82, group communication server 12 may add or modify dynamic profile selection rules, which may define how to make a profile selection based on one or more factors, such as but not limited to, location information, time of day, calendar information, presence information, a user preference, group communication application in use, communication session originator information, user device capability, user device in user, target participant device capability, subject or title of the communication, context of the communication, or other participant information.

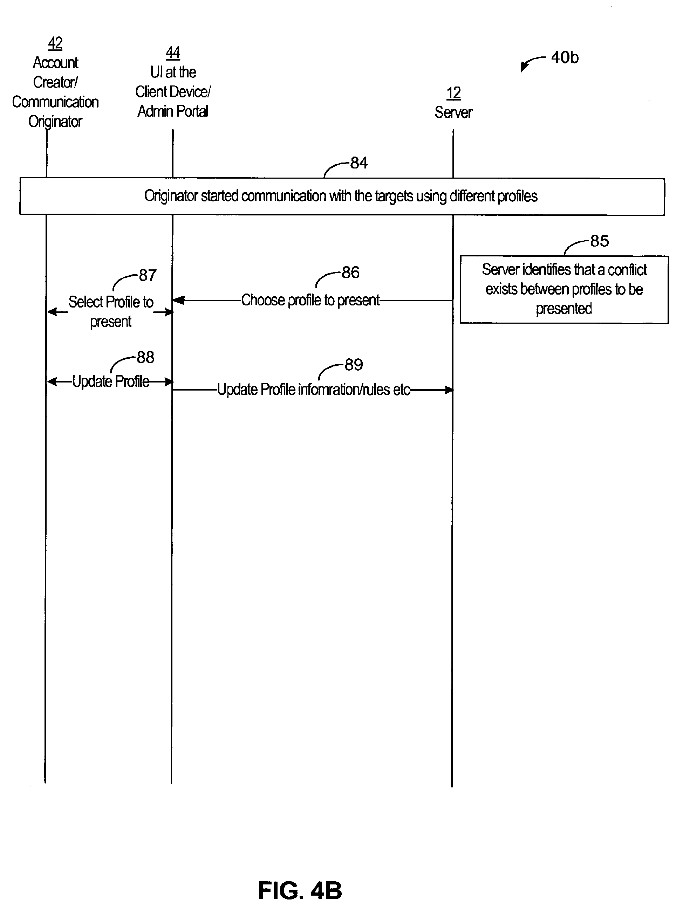

Referring to Fig. 4B, in an aspect, an example of a message flow 40b relating to profile usage and updates relates to actions of an account creator and/or communication session originator 42, a user interface (UI) 44, which may be located at any one of the user devices of the communication session originator and/or at another communication device capable of accessing an administrative web portal, and group communication server 12. At 84, communication session originator 42 may initiate a group communications session with a plurality of different target group participants, where group communication server 12, and in particular profile determiner 30 (Fig. 1), may identify different ones of the plurality of different established profiles 18 to be displayed to at least two different group participants for the same user.

At 85, profile determiner 30 may identify that a conflict exits between potentially applicable profiles to be presented to one or more group participants. For example, a profile conflict may exist when a group participant has access to more than one profiles of the communication session originator and the profile rules for which profile the group participant should view during the current communication are inconsistent. At 86, the profile determiner 30 may generate a choose profile to present user interface for display on the client device or administrative portal 44 that enables the user to resolve the presentation conflict. At 87, in response, account creator and/or communication session originator 42 may select a profile to present to resolve the presentation conflict.

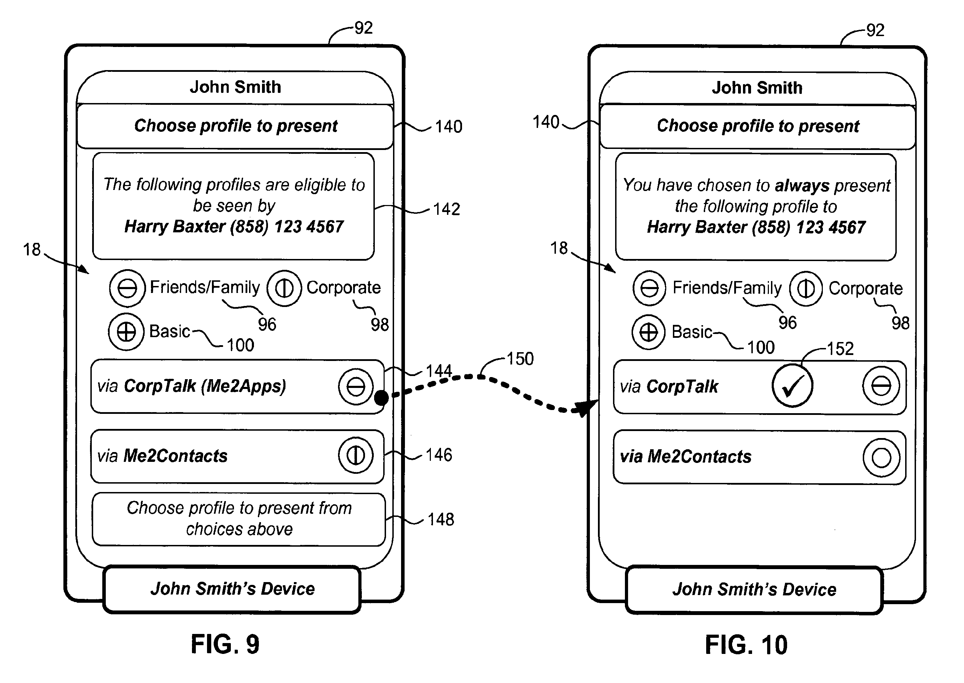

Referring to Figs. 9 and 10, in an aspect where profile determiner 30 (Fig. 1) identifies that a conflict exists between potentially applicable profiles to be presented, profile determiner 30 may generate a choose profile to present user interface 140 for display on client device or administrative portal 92. In an aspect, for example, choose profile to present user interface 140 presents a contact identifier 142, such as a name and or number associated with the contact, and further identifies the source of the profile presentation conflict, such as an application based profile designation 144 conflicting with a contact based profile designation 146. Additionally, choose profile to present user interface 140 presents a chooser tool 148 that, when selected by a user as indicated at 150, enables receipt of user input to resolve the presentation conflict. Referring to Fig. 10, for example, chooser tool 148 allows the user to select a desired profile to present, and includes a successful selection indicator 152 to provide feedback to the user to confirm the selection.

Referring back to Fig. 4B, at 88, while the group communication session is ongoing, UI 44 may present an update profile prompt to communication session originator. For example, a profile update may be manually triggered by communication session originator, or may be in response to actions occurring during the on-going group communication session, such as a desire to change a profile to be presented or such as designating a profile to be presented to a group participant who has joined the group communication session after the group communication session establishment, e.g. a late join. At 89, in response, communication session originator 42 may initiate an exchange with group communication server 12, and in particular profile manager 14, to update one or more user profiles or one or more dynamic user selections rules, which are subsequently saved and stored by group communication server 12.

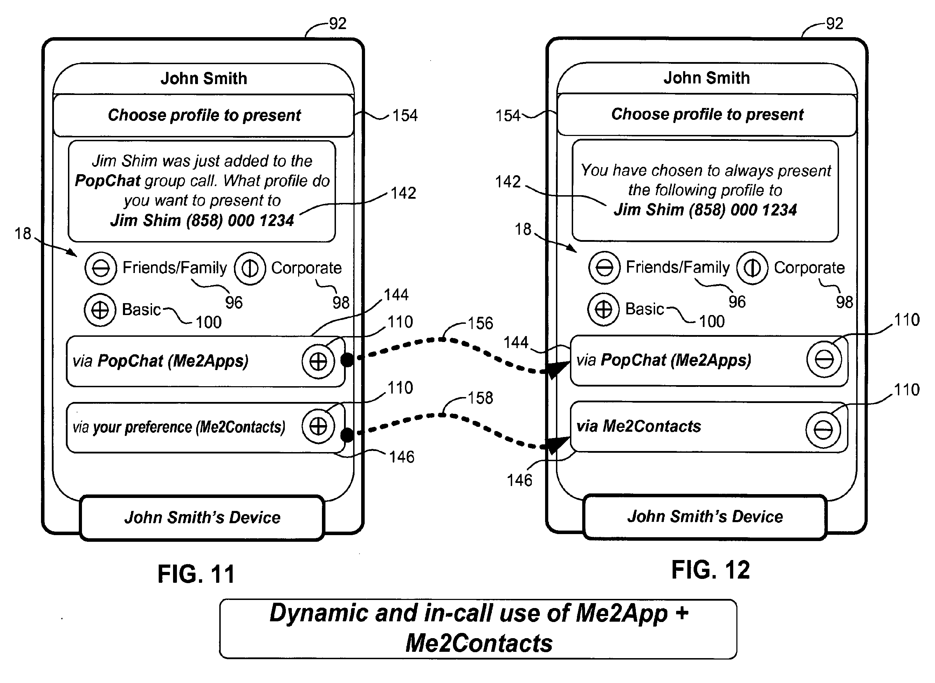

Referring to Figs. 11 and 12, in one example such as when a new group participant has entered an already established group communication session, profile determiner 30 may generate a choose profile user interface 154 for display on client device or administrative portal 92. In an aspect, for example, choose profile user interface 154 presents contact identifier 142, such as a name and or number associated with the contact who has late joined the group communication session, and further identifies potential profile presentation rules, such as application based profile designation 144 or contact based profile designation 146. Additionally, choose profile user interface 154 presents selection tool 110 that, when selected by a user as indicated at 156 and 158, enables receipt of user input to identify the desired presentation profile. Referring to Fig. 12, for example, selection tool 110 allows the user to select a desired profile to present, thereby enabling dynamic in-communication profile selection and modification.

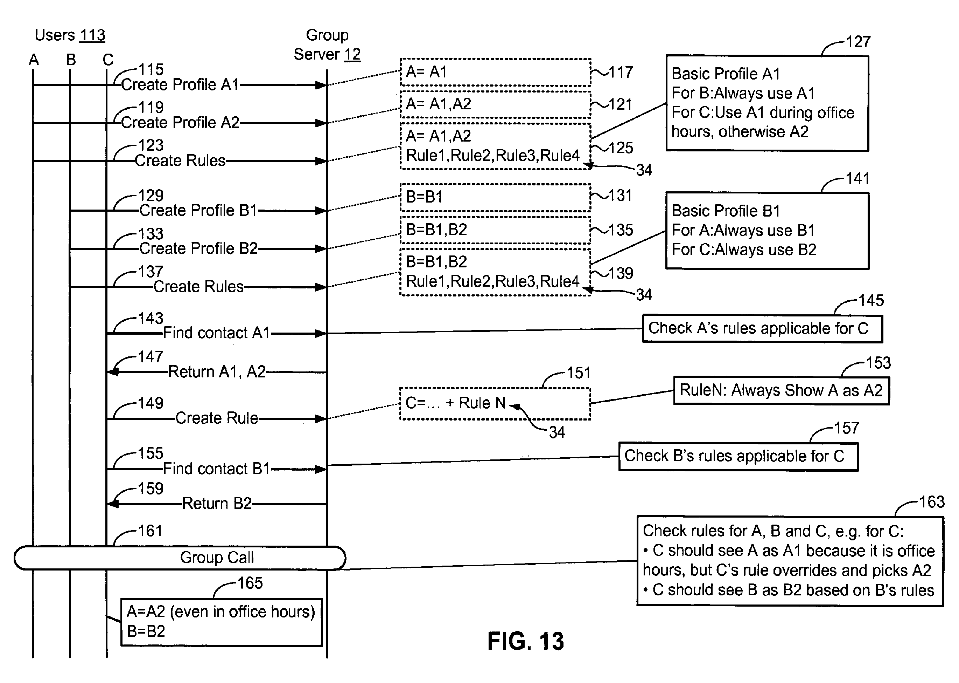

Referring to Fig. 13, in another example, one aspect of a message flow 111 from the perspective of group communication server 12 demonstrates interactions with different users 113, such as user A, user B and user C, in establishing respective user profiles, in discovering contacts, and in profile selection for group communication. For instance, at 115, user A may exchange one or more messages with group communication server 12 to create a first profile, e.g. profile A1. At 117, group communication server 12 responds by creating and storing profile A1 in association with an account of user A. Although not illustrated, it should be noted that the profiles discussed in this example, such as profile A1, may be associated by group communication server 12 (or a component thereof) with a single user account, e.g. user account 20 (Fig. 1), and may include profile information 13 (Fig. 2) including various elements or parameters that define a personality of the profile. Further, each profile discussed in this example, or each user account, or both, may be associated with one or more profile selection rules 34 (Fig. 1). In any case, at 119, user A may exchange one or more messages with group communication server 12 to create a second profile, e.g. profile A2. At 121, group communication server 12 responds by creating and storing profile A2 in association with the account of user A, in addition to previously stored profile A1. At 123, user A may exchange one or more messages with group communication server 12 to create one or more profile selection rules 34, such as Rules 1-4. At 125, group communication server 12 responds by creating and storing profile selection rules 34, such as Rules 1-4, in association with the account of user A and profiles A1 and A2. For example, in one case that should not be construed as limiting, as illustrated at 127, group profile section rules 34 received at 123 may define that profile A1, which may be a basic profile, is to be used to represent user A in communications with user B at all times, whereas profile A1 should be used to represent user A in communications with user C during office hours, but otherwise profile A2 may be used in communications with user C.

Similarly, at 129, user B may exchange one or more messages with group communication server 12 to create a first profile, e.g. profile B1. At 131, group communication server 12 responds by creating and storing profile B1 in association with an account of user B. At 133, user B may exchange one or more messages with group communication server 12 to create a second profile, e.g. profile B2. At 135, group communication server 12 responds by creating and storing profile B2 in association with the account of user B, in addition to previously stored profile B1. At 137, user B may exchange one or more messages with group communication server 12 to create one or more profile selection rules 34, such as Rules 1-4. At 139, group communication server 12 responds by creating and storing profile selection rules 34, such as Rules 1-4, in association with the account of user B and profiles B1 and B2. For example, in one case that should not be construed as limiting, as illustrated at 141, group profile section rules 34 received at 137 may define that profile B1, which may be a basic profile, is to be used to represent user B in communications with both user A and user C at all times.

In another aspect, one or more of the users 113 may communicate with group communication server 12 to discover the other users, as well as obtain profile information relating to the other users. For example, at 143, user C may exchange one or more messages with group communication server 12 to find a contact based on data that may be matched to profile information of the contact, or to find additional profile information relating to a known contact. For instance, at 143, user C may send a request to find one or more profiles for a contact, such as based on information corresponding to a profile, e.g. profile A1, associated with the contact, e.g. user A. For example, the information corresponding to the profile that user C may have could include information such as another user's phone number, name or profile-specific username, an identifier or code (e.g. from a business card), among other types of user profile-related information. At 145, group communication server 12 identifies that the account of user A matches the received profile A1, and checks profile selection rules 34, e.g. Rules 1-4, defined by user A at 123. In this case, for example, group communication server 12 determines that user C may be provided with profiles A1 and A2 based on A's rule that states profile A1 should be used to represent user A in communications with user C during office hours, but otherwise profile A2 may be used in communications with user C. Accordingly, at 147, group communication server 12 sends a message including (or otherwise providing access to) profiles A1 and A2 or the corresponding profile information of profiles A1 and A2.

In another aspect, one or more of the users 113 may communicate with group communication server 12 to define how other users are presented on the device of the respective user. For example, in one aspect, at 149, user C may exchange one or more messages with group communication server 12 to create a rule, such as profile selection rule 34, to define how to represent another user, such as user A, on the device of user C. For instance, in this case as illustrated at 153, user C may create "Rule N" that defines that user A should always be represented on the device of user C according to profile A2. In this case, for example, Rule N of user C may overcome a dilemma faced by profile determiner 30 (Fig. 1), for example when attempting to determine how user A is to be represented to user C, as profile determiner 30 may be aware that user C has access to both profile A1 and A2. Also, it should be noted that rather than the express message illustrated at 149, profile determiner 30 (Fig. 1) may include a rule generation component including one or more of heuristics, rules, a neural network, artificial intelligence, etc., such that rule generation component can create rules for a given user based on past user actions or based on predicted user selections. Such automatically created profile selection rules 34 (Fig. 1) may then be subsequently confirmed or modified by a user, such as during a potential application of the automatically created rule, or such as during a rules confirmation session in which a user may separately access group communication server 12 and verify such automatically created profile selection rules 34.

Additionally, similar to the acts at 143, 145 and 147, user C may also attempt to discover user B information. For example, at 155, user C may exchange one or more messages with group communication server 12 to find one or more profiles for a contact, such as based on information corresponding to a profile, e.g. profile B1, associated with the contact, e.g. user B. In this example, the lookup of user B information being performed by user C may be performed based on, for example, some profile information corresponding to user B. In an aspect, for example, such profile information may include user B's profile identifier corresponding to profile B1, which user C may somehow come to know of, e.g. from another common friend, etc. In some aspects, the knowledge by user C of profile information of user B, e.g. a profile identifier or profile-specific name of another user, e.g. user B, may not be sufficient to get and view the profile corresponding to that profile identifier or profile-specific name. User B may establish one or more rules related to sharing or not sharing profile information, as well as what profile information to share with whom. As such, these aspects will allow user C to find user B, but only see an appropriate profile of B, or if user B's rule does not allow user C to find user B at all, then the lookup will fail. Such control over sharing of profiles and profile information may be useful to maintain privacy and/or to control or reduce spam problems. In other words, the public knowledge or leakage of profile information, such as a profile identifier, may not necessarily expose the user or the user profile information. At 157, group communication server 12 identifies that the account of user B matches the received profile B1, and checks profile selection rules 34, e.g. Rules 1-4, defined by user B at 137. In this case, for example, group communication server 12 determines that user C may be provided with only profile B2 based on B's rule that states profile B2 always should be used to represent user B in communications with user C. Accordingly, at 159, group communication server 12 sends a message including (or otherwise providing access to) profile B2 or the corresponding profile information of profile B2.

At 161, one of users 113 may initiate a group communication session, inviting the remainder of the users to participate. At 163, group communication server 12 or a component thereof, such as profile determiner 30 (Fig. 1), may check profile selection rules 34 associated with the accounts of user A, user B and user C in order to determine how each user should be represented to the other users, and/or how each user wishes the other users to be presented on their device. In one example of a possible result based on the example rules discussed in this case, as illustrated at 163, group communication server 12 or profile determiner 30 may initially determine that user C should see user A based on profile A1 based on additional contextual information, e.g. that a current time of day corresponds to office hours, however, the rules of user C are then applied and profile A2 is selected based on the Rule N, which states that user C always wants user A represented based on profile A2. Further, group communication server 12 or profile determiner 30 may determine that user C should see user B based on profile B2 based on the rules of user B. Thus, at 165, during the group communication session, from the perspective of user C, user A is represented according to profile A1 and user B is represented according to profile B2. The corresponding representations to the other users on the other user devices are determined in a similar manner.

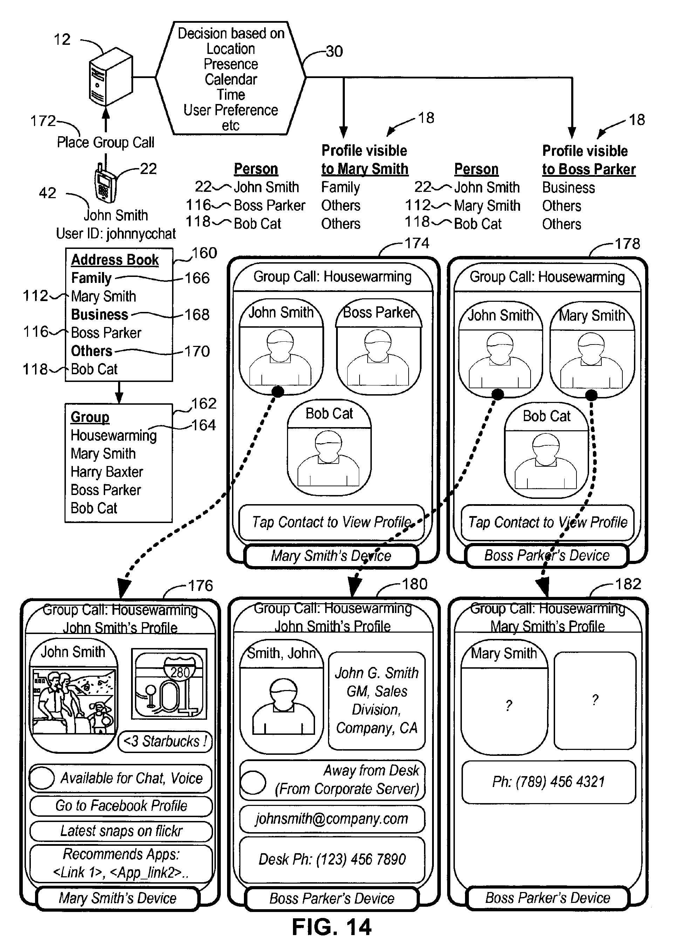

Referring to Fig. 14, in an example use case of system 10 (Fig. 1), consider the following scenario. User John Smith, operating user device 22, chooses contacts 112, 116, and 118 from his address book 160 and creates a group 162 with a group identifier 164, e.g. "Housewarming." Further, in an aspect, contacts in John's address book are classified under the categories Family 166, Business 168 and Others 170. In some aspects, each category may also correspond to a respective one of a plurality of profiles associated with the user account of user John Smith. Thus, the contacts in group 162 include Mary Smith (Family), Boss Parker (Business), and Bob Cat (Others).

John Smith, otherwise referred to as communication session originator 42, then initiates a group communication session at 172. Group communication server 12 receives the group communication session origination request, and executes profile determiner 30 to identify the respective profiles to be presented to other group participants for each group participant.

For example, user interface (UI) 174 shows Mary Smith's (communication session participant) view. In this case, Mary Smith is able to see a determined one of each group participants' profile 18 based on the relation each of the participants has specified with Mary Smith.

UI 176 shows the profile Mary Smith sees when choosing to view John Smith's (Family) profile. Since John Smith has chosen to present his family profile to Mary Smith, a more elaborate and rich profile is seen by Mary Smith.

UI 178 shows Boss Parker's (group participant) view. It is assumed that all other group participants either do not have Boss Parker listed in their address book or have his contact under the "Others" category 170. Therefore, Boss Parker is only able to view basic profile information for all of the group participants except John Smith, who has listed Boss Parker under the Business category 168.

UI 180 shows the profile Boss Parker sees when choosing to view John Smith's profile. Since John Smith has chosen to present his business profile to Boss Parker, Boss Parker is able to see John Smith's business profile.

UI 182 shows the profile Boss Parker sees when selecting to view Mary Smith' profile. Since it is assumed that Mary Smith either does not Boss Parker listed in her address book or listed under "Others" category 170. Therefore, Boss Parker can view only the default name and phone number of Mary Smith.

It is noted that UI 176 and UI 180 both shows John Smith's profile - but they are different based on John Smith's relationship with the other party.

This example demonstrates the dynamic profile selection based on target participants (with whom profile owner is communicating), however, the same logic can apply based on location, time, application, presence information (mode), or any other user preference, etc.

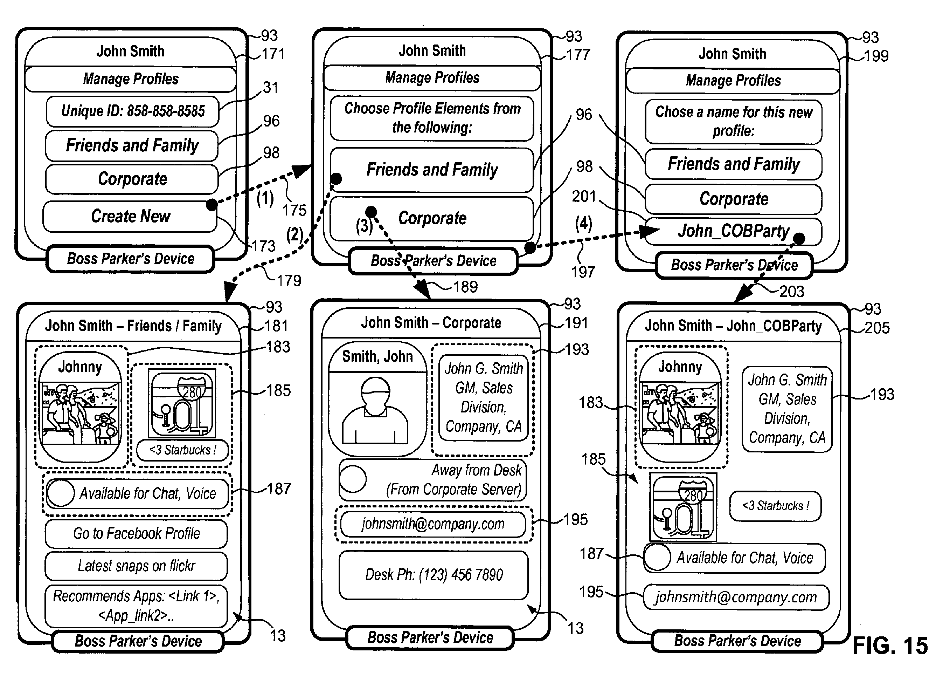

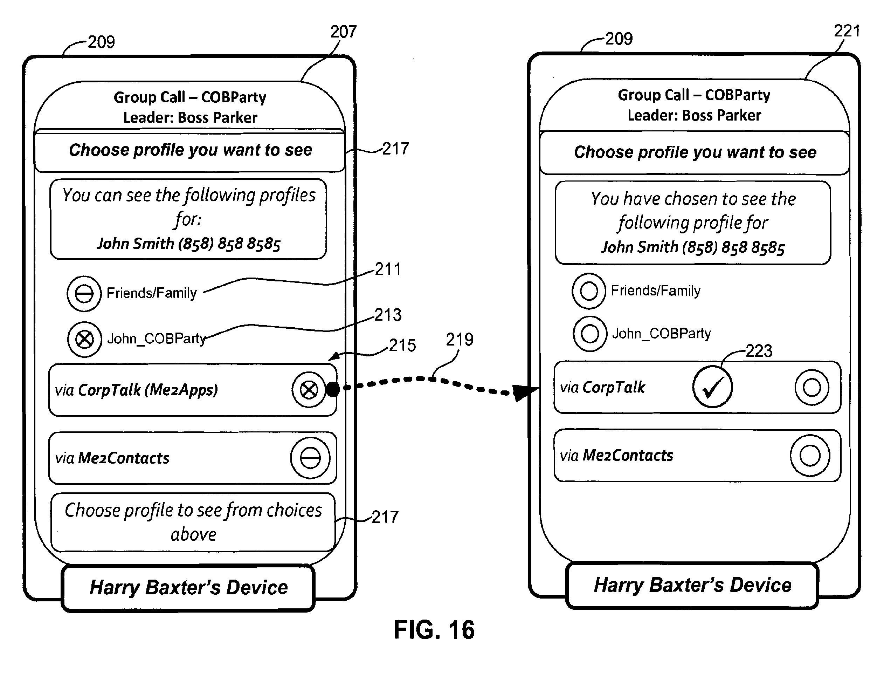

Referring to Figs. 15 and 16, in another example use case of system 10 (Fig. 1), the described apparatus and methods may enable a group communication session originator or some other authority controlling participants that define a group to create a hybrid user profile for one or more participants in the group based on one or more user profiles associated with the user. In some aspects, the described apparatus and methods may restrict an ability to create a hybrid profile based on a privilege, e.g. where an operator of the system or where the user associated with the one or more user profiles may grant the privilege.

For example, consider the scenario where an authority controlling participants that define a group, e.g. group leader Boss Parker, has John Smith as a colleague, with a Corporate profile visible, and as a friend, with a Friends and Family profile visible. Further, Boss Parker wants to throw a Party after a meeting with the customer and wants to create a group communication session with the customer and introduce John Smith in a combined formal and informal manner.

In this case, in one aspect, the described apparatus and methods may allow Boss Parker to create a hybrid profile for a Group communication session having a name of "Close of Business Party," abbreviated as "COBParty."

Referring to Fig. 15, the described apparatus and methods may include a manage user profiles user interface 171 on user device 93 of Boss Parker to manage the profiles of John Smith. In an aspect, manage user profiles user interface 171 provides interfaces to access Friends and Family profile 96, Corporate profile 98, and a create new profile 173. In an aspect, for example, at 175, upon selection of create new profile 173 a new manage profile UI 175 is presented that allows profile elements to be selected from stored profiles, such as via interfaces to Friends and Family profile 96 and Corporate profile 98. At 179, upon selection to access Friends and Family profile 96, a user interface 181 for "John Smith - Friends/Family" is presented, including profile information 13 defining one or more friends and family profile elements. As one example, Boss Parker may select profile element 183, e.g. a profile-specific photograph and a profile-specific name, profile element 185, e.g. profile-specific location information (similar to location information 19 of Fig. 2), and profile element 187, e.g. profile-specific presence information (similar to presence information 21 of Fig. 2), for inclusion in the new hybrid profile. Further, at 189, upon selection to access Corporate profile 98, a user interface 191 for "John Smith - Corporate" is presented, including profile information 13 defining one or more corporate profile elements. As one example, Boss Parker may select profile element 193, e.g. a profile-specific title and company information, and profile element 195, e.g. profile-specific contact information (similar to contact information 23 of Fig. 2), for inclusion in the new hybrid profile. Accordingly, at 197, the described apparatus and methods generate updated profiles user interface 199, where a name such as "John_COBParty" is received from Boss Parker to identify the new hybrid profile for John Smith, as indicated at 201. Further, upon receiving a selection to access new hybrid profile 201, as illustrated at 203, the described apparatus and methods generate updated hybrid profile user interface 205, e.g. "John Smith - John_COBParty," defined by the selected profile elements 183, 185, 187, 193, and 195. As such, Boss Parker may distribute the hybrid profile of "John Smith - John_COBParty" to one or more participants in the "John_COBParty" group communication session. In other words, the described apparatus and methods allow one or more users to selectively advertise one or more profile elements of other users.

Referring to Fig. 16, for example, a group communication participant named Harry Baxter receives the hybrid profile of "John Smith - John_COB Party," as indicated by user interface 207 on user device 209 of Harry Baxter. Additionally, in one aspect, Harry Baxter is a friend of John Smith and previously had access to John's Friends/Family profile. Accordingly, user interface 207 indicates access to the Friends and Family profile of John Smith at 211, and access to the hybrid profile "John Smith - John_COBParty" at 213. Further, in an aspect, user interface 207 may be generated when Boss Parker creates a group communication session and presents the hybrid profile of "John Smith - John_COBParty" to the group participants. In an aspect, for example when the group communication session is via an application, such as the CORPTALK application, user interface 207 may present the hybrid profile of "John Smith - John_COBParty" in association with the CORPTALK application, as indicated at 215. Further, user interface 207 may include one or more prompts 217 to encourage the user, e.g. Harry Baxter, to confirm the association of the available profiles to a contact or an application. In this case, as indicated at 219, the user may select one of the available profiles to associate with an application, such as the CORPTALK application. As such, user interface 221 includes a confirmation indicator 223 to confirm the selection. Therefore, in this case, the described apparatus and methods allow Boss Parker to selectively advertise the hybrid profile of "John Smith - John_COBParty" to other users of the "John_COB Party" group communication session.

Thus, the described apparatus and methods enable users the flexibility to create multiple user profiles using only one unique user account with a group communications platform, such as group communication server 12.

Moreover, the described apparatus and methods enable different profiles to be tied to different applications, or different target group participants, which may be associated with categories or profiles such as business, family, friends, basic, etc. The end user has control over what information is tied to each of the profile, such as a name, photograph, location information, presence information, etc.

In some aspects, each user account may be identified via a user identifier (ID), which may be common or shared across applications. Moreover, in some aspects, the user information and/or the user ID could be customized and chosen by the end user on a per application or per profile basis.

For example, the user could create a corporate profile with full first name and last name, formal photograph, and presence information integrated with his/her corporate calendar. The user could then choose which applications present this corporate profile while communicating with other users.

On the other hand, the user could setup profiles which are of a more casual nature while using applications for communicating with friends and family. The user could choose to display more information such as current location, current activity, a casual photograph, etc.

Based on each communication session context or application launch, profile determiner 30 may provide the user the choice to associate a particular user profile. Additionally, profile determiner 30 may also provide the user the choice to assign which user profile to use while in communication with any given contact. In an aspect, profile determiner 30 may store these user preferences as one or more profile selection rules 34 for subsequent communication, wherein such rules may be based on user choice or based on the classification of contacts into groups like friends, family, work, etc., in a contacts list or address book on a user device or in a network-based address book associated with the user device.

The following summarizes use cases and associated options relating to the user profiles and their selection, such as by a communication session originator, a group communication server, and/or a target group participant, based on rules on a per application or per communication session context basis:
1. Originator Client Selected Profiles:
   a) Individual User Profile
      - Manual Selection
      - Rule based Auto Selection
   b) Group Profile
      - Manual Selection by group managers/Originator
      - Rule based Auto Selection
2. Server Selected Profiles
   a) Individual User Profile
      - Rule based Auto Selection
      - Learning based Auto selection (server can use previous communication history and profiles used earlier)
   b) Group Profile
      - Rule based Auto Selection
3. Active profiles in a group:
   - Single profile visible to all other members of the group
   - Multiple active profiles per communication session, with possibly different profiles visible to different targets in a group.
4. In-communication Profile switching:
   - Profile selection only at the communication session initiation and no switching of profile during the communication session
   - Profile switching allowed during the communication session (either triggered automatically or manually)
5. Target Group Participant controlled profile selection:
   - Target plays no role in what profile target gets to see for another group participant
   - Target is able to control what profile it sees for a given member, and can create and save rules. (e.g. Rule: "Always show me profile 1 for John Smith, irrespective of the selected profile"-this assumes the Target has previously obtained profile 1 for John Smith)
6. Administrative Control of profiles:
   - Group administrators can block individual / group profiles that are violating any terms of usage
   - Members can report if someone else is using a profile which may be violating terms of use, subsequently, based on system rules, Server can either send triggers to administrators of the group or block the reported profiles.
   - Group leader/arbitrator can control a given participant's profile visible to other participants in the group communication session. The group leader can override a participant's profile choice.
7. Rules Storage
   - Rules saved on Client
   - Rules saved on Server

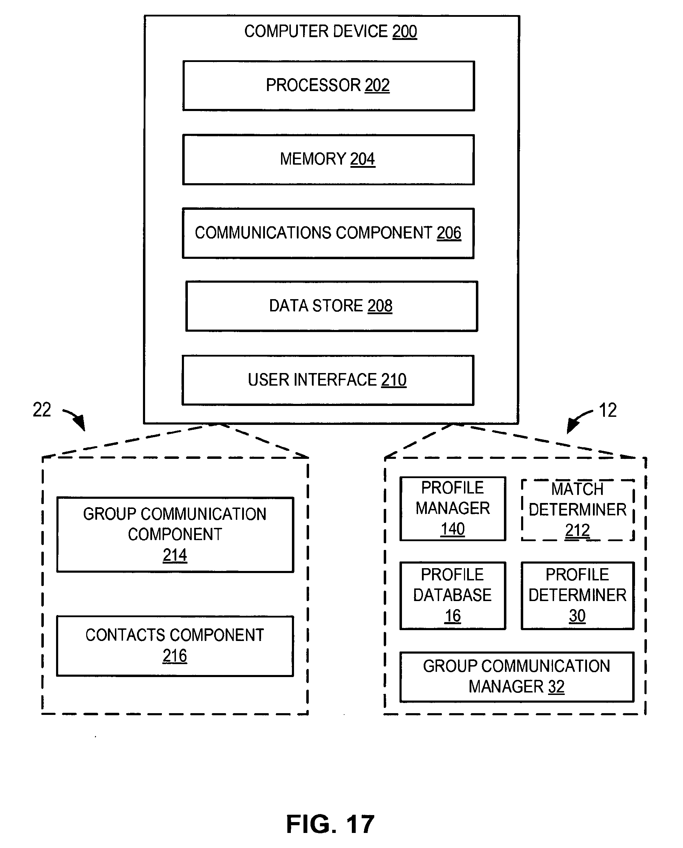

Referring to Fig. 17, in an aspect, any of the components of system 10 may be implemented as one or more computer devices 200 specially programmed to perform the described functionality of the respective component. For example, in Fig. 1, computer device 200 may be used to implement one or more of user devices 22, 24, 26 or 28, and/or group communication server 12.

In an aspect, computer device 200 includes a processor 202 for carrying out processing functions associated with one or more of components and functions described herein. Processor 202 can include a single or multiple set of processors or multi-core processors. Moreover, processor 202 can be implemented as an integrated processing system and/or a distributed processing system.

Computer device 200 further includes a memory 204, such as for storing data used herein and/or local versions of applications being executed by processor 202. Memory 204 can include any type of memory usable by a computer, such as random access memory (RAM), read only memory (ROM), tapes, magnetic discs, optical discs, volatile memory, non-volatile memory, and any combination thereof.

Further, computer device 200 includes a communications component 206 that provides for establishing and maintaining communications with one or more parties utilizing hardware, software, and services as described herein. Communications component 206 may carry communications between components on computer device 200, as well as between computer device 200 and external devices, such as devices located across a communications network and/or devices serially or locally connected to computer device 200. For example, communications component 206 may include one or more buses, and may further include transmit chain components and receive chain components associated with a transmitter and receiver, respectively, operable for interfacing with external devices.

Additionally, computer device 200 may further include a data store 208, which can be any suitable combination of hardware and/or software, that provides for mass storage of information, databases, and programs employed in connection with aspects described herein. For example, data store 208 may be a data repository for applications not currently being executed by processor 202.

Computer device 200 may additionally include a user interface component 210 operable to receive inputs from a user of computer device 200, and further operable to generate outputs for presentation to the user. User interface component 210 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component 210 may include one or more output devices, including but not limited to a display, a speaker, a haptic feedback mechanism, a printer, any other mechanism capable of presenting an output to a user, or any combination thereof.

Further, for example in the aspect of group communication server 12 (Fig. 1), computer device 200 may the previously-discussed profile manager 14, profile database 16, profile determiner 30, and group communication manager 32. Moreover, in this aspect, computer device 200 may further include a match determiner 212 to carry out the friend finder profile and application matching actions described, for example, in Fig. 3 at 60.

Additionally, in an example of a user device, such as any of user devices 22, 24, 26, or 28 (for simplicity, illustrated in Fig. 17 as user device 22), computer device 200 may include a group communication component 214 for creating one or more user profiles and for performing group communication related functions. For example, group communication component 214 is executed by processor 202 and interacts with group communication server 12. Further, for example, group communication component 214 may include, but is not limited to, one or any combination of an application or software, computer-readable instructions, hardware, firmware, etc. Additionally, in this aspect, computer device 200 implemented as user device 22 may further include a contacts component 216, such as a contact list, personal information manager, etc., that includes one or more contact names and associated information, such as all or some portion of one or more of the plurality of user profiles 18 (Fig. 1) associated with users of system 10 (Fig. 1). As such, contacts component 216 may include profile-specific usernames, contact information, preferences, etc., associated with a given contact based on obtaining such information during a group communication session or via the friend finder functionality of group communication server 12.

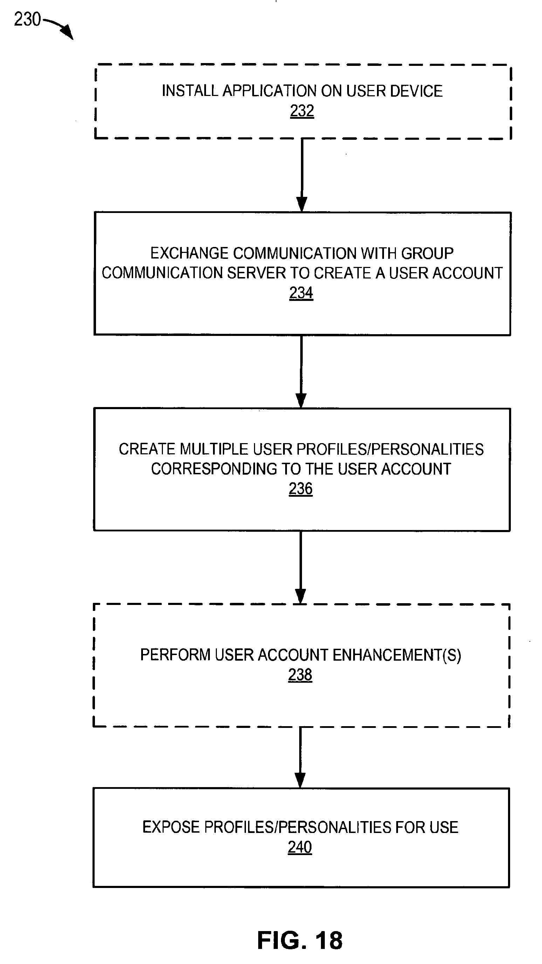

Referring to Fig. 18, in operation, an aspect of a method 230 of multiple profile creation, management and use under a single user account optionally (as indicated by dashed lines) may include installing a group communication application on a user device (Block 232). For example, in an aspect, a user of a user device, such as user device 22 (Fig. 1) may download a group communications component 214, such as one or more group communications applications, onto the device. Alternatively, a user device may be obtained with one or more group communication components 214 preconfigured on the device.

Further, method 230 includes exchanging communications with a group communication server to create a user account (Block 234). For example, in an aspect, user device 22 via group communication component 214, e.g. group communication application, may contact group communication server 12 and establish a user account corresponding to user device 22 and or a particular user of user device 22. The communication exchange may include an exchange of contact and/or billing information, and a verification and/or authentication of the user, user device, or contact/billing information.

Also, method 230 includes creating multiple user profiles/personalities corresponding to the user account (Block 236). For example, in an aspect, a device user, a wireless operator, an enterprise/business, or some other administrator may create one or more user profiles 18 corresponding to the user account to represent different user personalities to different participants in group communication sessions.

Optionally, method 230 may include perform user account enhancements (Block 238). For example, in an aspect, the different user profiles or personalities 18 may be associated for use with different group communications applications, different contacts, etc. For instance, a user, wireless operator, enterprise, administrator, etc., may map a respective one of the plurality of user profiles to a given contact, thereby causing the user to be represented by the respective profile during group communications with the given contact. Further for instance, a user, wireless operator, enterprise, administrator, etc., may map a respective one of the plurality of user profiles to a given group communication application, thereby causing the user to be represented by the respective profile during group communications via the given group communication application. Additionally, for example, a user, wireless operator, enterprise, administrator, etc., may one or more profile selection rules 34 that define conditions for use of a respective one of the plurality of user profiles, thereby enabling profile determiner 30 to automatically cause the user to be represented by the respective profile during group communications.

Additionally, method 230 includes exposing the multiple profiles/personalities for use (Block 240). For example, in an aspect, a selected one the plurality of user profiles 18 may be presented to respective ones of other group participants during a group communication session, e.g. for which the user is an originator or an invited participant. Also, for example, one or more of the plurality of user profiles 18, and their corresponding profile information 13 (Fig. 1), may be available to enable the user to be discovered by other users, or to enable user profile information 13 to be discovered by other users.

Thus, the described apparatus and methods enable creation of a single user account having a plurality of user profiles 18, e.g. representing different user personalities, and use of one or more of the profiles/personalities in a group communication session.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a communication device, which can be a wired communication device or a wireless communication device. A communication device can also be called a system, device, subscriber unit, subscriber station, mobile station, mobile, mobile device, remote station, remote terminal, access terminal, user terminal, terminal, communication device, user agent, user device, or user equipment (UE). A wireless communication device may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Various aspects or features may be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method for establishing a group communication session, comprising:
receiving a request from an originator (22) to initiate a group communication session, the request identifying a plurality of participants (24, 26, 28); and
selecting a respective originator profile (18) from a plurality (16) of different established originator profiles (18) to be displayed to each of the plurality of participants (24, 26, 28),
each of the plurality (16) of different established originator profiles (18) being associated with a single user account (20),
**characterised in that**:
a first selected originator profile (18) to be displayed to a first one of the plurality of participants (24, 26, 28) differs from a second selected originator profile (18) to be displayed to a second one of the plurality of participants (24, 26, 28).

2. The method of claim 1, wherein selecting the respective originator profile (18) to be displayed to each of the plurality of participants (24, 26, 28) comprises selecting based on a contact category associated with each participant (24, 26, 28).

3. The method of claim 1, wherein selecting the respective originator profile (18) to be displayed to each of the plurality of participants (24, 26, 28) comprises selecting based on an application type corresponding to the group communication session.

4. The method of claim 1, wherein selecting the respective originator profile (18) to be displayed to each of the plurality of participants (24, 26, 28) is based on a device identification of a device the originator (22) is using for the group communication session.

5. The method of claim 1, wherein selecting the respective originator profile (18) to be displayed to each of the plurality of participants (24, 26, 28) comprises selecting based on one or more profile rules (34) corresponding to the single user account (20).

6. The method of claim 1, further comprising:
obtaining a participant profile (18) from a plurality (16) of different established participant profiles (18) for each participant (24, 26, 28) to be displayed to the originator (22) and other ones of the plurality of participants (24, 26, 28),
wherein, for at least one participant (24, 26, 28), a first selected participant profile (18) to be displayed to a first one of the originator (22) or the other ones of the plurality of participant (24, 26, 28) differs from a second selected participant profile (18) to be displayed to a second one of the originator (22) or the other ones of the plurality of participants (24, 26, 28).

7. The method of claim 1, further comprising:
establishing the group communication session;
receiving a request to add a new participant (24, 26, 28) after the establishing of the group communication session;
sending a profile selection request to at least one of the originator (22) or the plurality of participants (24, 26, 28), wherein the profile selection request asks for an identification of one of the plurality of different established originator profiles (18) or one of the plurality of different participant profiles (18) to be displayed to the new participant (24, 26, 28); and
receiving a profile selection from at least one of the originator (22) or the plurality of participants (24, 26, 28), wherein the profile selection includes an identified one of the plurality of different established originator profiles (18) or an identified one of the plurality of different participant profiles (18) to be displayed to the new participant (24, 26, 28).

8. The method of claim 1, further comprising:
establishing the group communication session;
receiving a request to add a new participant (24, 26, 28) after the establishing of the group communication session, wherein the new participant (24, 26, 28) is associated with one or
more different established participant profiles (18);
sending a profile selection request to the new participant (24, 26, 28), wherein the profile selection request asks for an identification of one of the one or more different established participant profiles (18) to be displayed to other participants (24, 26, 28) in the group communication session; and
receiving a profile selection from new participant (24, 26, 28), wherein the profile selection includes an identified one of the one or more different established participant profiles (18) to be displayed to other participants (24, 26, 28) in the group communication session.

9. The method of claim 1, further comprising:
receiving a group communication session profile identifier;
establishing the group communication session;
receiving a request to add a new participant (24, 26, 28) after the establishing of the group communication session, wherein the new participant (24, 26, 28) is associated with one or
more different established participant profiles (18); and
selecting one of the one or more different established participant profiles (18) that corresponds to the group profile identifier.

10. The method of claim 1, further comprising:
receiving a group communication session profile identifier;
establishing the group communication session;
wherein selecting the originator profile (18) from the plurality (16) of different established originator profiles (18) to be displayed further comprises selection one of the plurality (16) of different established originator profiles (18) that corresponds to the group profile identifier.

11. The method of claim 1, further comprising:
establishing the group communication session; and
dynamically changing the respective originator profile (18) selected to be displayed during the group communication session.

12. A computer program product for establishing a group communication session, comprising:
a computer-readable medium, comprising:
at least one instruction operable to cause a computer to receive a request from an originator (22) to initiate a group communication session, the request identifying a plurality of participants (24, 26, 28); and
at least one instruction operable to cause the computer to select a respective originator profile (18) from a plurality (16) of different established originator profiles (18) to be displayed to each of the plurality of participants (24, 26, 28), each of the plurality (16) of different established originator profiles (18) being associated with a single user account (20), **characterised in that**:
a first selected originator profile (18) to be displayed to a first one of the plurality of participants (24, 26, 28) differs from a second selected originator profile (18) to be displayed to a second one of the plurality of participants (24, 26, 28).

13. An apparatus for establishing a group communication session, comprising:
means for receiving a request from an originator (22) to initiate a group communication session, the request identifying a plurality of participants (24, 26, 28); and
means for selecting a respective originator profile (18) from a plurality (16) of different established originator profiles (18) to be displayed to each of the plurality of participants (24, 26, 28), each of the plurality (16) of different established originator profiles (18) being associated with a single user account (20),
**characterised in that**:
a first selected originator profile (18) to be displayed to a first one of the plurality of participants (24, 26, 28) differs from a second selected originator profile (18) to be displayed to a second one of the plurality of participants (24, 26, 28).

14. An apparatus as claimed in claim 13 wherein the apparatus comprises at least one processor for establishing a group communication session, comprising:
a first module for receiving a request from an originator (22) to initiate a group communication session, the request identifying a plurality of participants (24, 26, 28); and
a second module for selecting a respective originator profile (18) from a plurality (16) of different established originator profiles (18) to be displayed to each of the plurality of participants (24, 26, 28), each of the plurality (16) of different established originator profiles (18) being associated with a single user account (20).

15. An apparatus as claimed in claim 13 wherein the apparatus comprises a group communications server for establishing a group communication session, comprising:
a group communication manager for receiving a request from an originator (22) to initiate a group communication session, the request identifying a plurality of participants (24, 26, 28); and
a profile determiner for selecting a respective originator profile (18) from a plurality (16) of different established originator profiles (18) to be displayed to each of the plurality of participants (24, 26, 28), each of the plurality (16) of different established originator profiles (18) being associated with a single user account (20).

## Patentansprüche

1. Ein Verfahren zum Einrichten einer Gruppenkommunikationssitzung, das Folgendes aufweist:
Empfangen einer Anfrage von einem Veranlasser bzw. Urheber (22) zum Initiieren bzw. Beginnen einer Gruppenkommunikationssitzung, wobei die Anfrage eine Vielzahl von Teilnehmern (24, 26, 28) identifiziert; und
Auswählen eines jeweiligen Urheberprofils (18) aus einer Vielzahl (16) unterschiedlicher eingerichteter Urheberprofile (18), das jedem der Vielzahl von Teilnehmern (24, 26, 28) angezeigt werden soll, wobei jedes der Vielzahl (16) von unterschiedlichen eingerichteten Urheberprofilen (18) mit einem einzelnen Nutzerkonto (20) assoziiert ist,
**dadurch gekennzeichnet, dass**
sich ein erstes ausgewähltes Urheberprofil (18), das einem ersten der Vielzahl von Teilnehmern (24, 26, 28) angezeigt werden soll, von einem zweiten ausgewählten Urheberprofil (18) unterscheidet, dass einem zweiten der Vielzahl von Teilnehmern (24, 26, 28) angezeigt werden soll.

2. Verfahren nach Anspruch 1, wobei das Auswählen des jeweiligen Urheberprofils (18), das jedem der Vielzahl von Teilnehmern (24, 26, 28) angezeigt werden soll, Auswählen basierend auf einer Kontaktkategorie aufweist, die mit jedem Teilnehmer (24, 26, 28) assoziiert ist.

3. Verfahren nach Anspruch 1, wobei das Auswählen des jeweiligen Urheberprofils (18), das jedem der Vielzahl von Teilnehmern (24, 26, 28) angezeigt werden soll, Auswählen basierend auf einem Anwendungstyp aufweist, der der Gruppenkommunikationssitzung entspricht.

4. Verfahren nach Anspruch 1, wobei das Auswählen des jeweiligen Urheberprofils (18), das jedem der Vielzahl von Teilnehmern (24, 26, 28) angezeigt werden soll, auf einer Einrichtungsidentifikation einer Einrichtung basiert, die der Urheber (22) für die Gruppenkommunikationssitzung nutzt.

5. Verfahren nach Anspruch 1, wobei das Auswählen des jeweiligen Urheberprofils (18), das jedem der Vielzahl von Teilnehmern (24, 26, 28) angezeigt werden soll, Auswählen basierend auf einer oder mehreren Profilregeln (34) aufweist, die dem einzelnen Nutzerkonto (20) entsprechen.

6. Verfahren nach Anspruch 1, das weiter Folgendes aufweist:
Erlangen eines Teilnehmerprofils (18) von einer Vielzahl (16) unterschiedlicher eingerichteter Teilnehmerprofile (18) für jeden Teilnehmer (24, 26, 28), das dem Urheber (22) und anderen der Vielzahl von Teilnehmern (24, 26, 28) angezeigt werden soll,
wobei sich für wenigstens einen Teilnehmer (24, 26, 28) ein erstes ausgewähltes Teilnehmerprofil (18), das einem ersten von Urheber (22) oder
den anderen der Vielzahl von Teilnehmern (24, 26, 28) angezeigt werden soll, von einem zweiten ausgewählten Teilnehmerprofil (18) unterscheidet,
das einem zweiten von Urheber (22) oder den anderen der Vielzahl von Teilnehmern (24, 26, 28) angezeigt werden soll.

7. Verfahren nach Anspruch 1, das weiter Folgendes aufweist:
Einrichten der Gruppenkommunikationssitzung;
Empfangen einer Anfrage zum Hinzufügen eines neuen Teilnehmers (24, 26, 28) nach dem Einrichten der Gruppenkommunikationssitzung;
Senden einer Profilauswahlanfrage an einen von Folgenden: den Urheber (22) oder der Vielzahl von Teilnehmern (24, 26, 28), wobei die Profilauswahlanfrage nach einer Identifikation eines der Vielzahl von unterschiedlichen eingerichteten Urheberprofile (18) oder eines der Vielzahl von unterschiedlichen Teilnehmerprofilen (18) fragt, das dem neuen Teilnehmer (24, 26, 28) angezeigt werden soll; und
Empfangen einer Profilauswahl von einem von Folgendem: dem Urheber (22) oder der Vielzahl von Teilnehmern (24, 26, 28), wobei die Profilauswahl ein identifiziertes Profil der Vielzahl unterschiedlicher eingerichteter Urheberprofile (18) oder ein identifiziertes Profil der Vielzahl unterschiedlicher Teilnehmerprofile (18) beinhaltet, das dem neuen Teilnehmer (24, 26, 28) angezeigt werden soll.

8. Verfahren nach Anspruch 1, das weiter Folgendes aufweist:
Einrichten der Gruppenkommunikationssitzung;
Empfangen einer Anfrage, einen neuen Teilnehmer (24, 26, 28) hinzuzufügen, und zwar nachdem Einrichten der Gruppenkommunikationssitzung, wobei der neue Teilnehmer (24, 26, 28) mit einem oder mehreren der unterschiedlichen, eingerichteten Teilnehmerprofile (18) assoziiert ist;
Senden einer Profilauswahlanfrage an den neuen Teilnehmer (24, 26, 28), wobei die Profilauswahlanfrage nach einer Identifikation von einem der ein oder mehreren unterschiedlichen eingerichteten Teilnehmerprofile (18) fragt, die den anderen Teilnehmern (24, 26, 28) in der Gruppenkommunikationssitzung angezeigt werden sollen; und
Empfangen einer Profilauswahl von einem neuen Teilnehmer (24, 26, 28), wobei die Profilauswahl ein identifiziertes Profil der ein oder mehreren unterschiedlichen, eingerichteten Teilnehmerprofile (18) beinhaltet, das den anderen Teilnehmern (24, 26, 28) in der Gruppenkommunikationssitzung angezeigt werden soll.

9. Verfahren nach Anspruch 1, das weiter Folgendes aufweist:
Empfangen eines Gruppenkommunikationssitzungsprofilidentifikators;
Einrichten der Gruppenkommunikationssitzung;
Empfangen einer Anfrage zum Hinzufügen eines neuen Teilnehmers (24, 26, 28) nach dem Einrichten der Gruppenkommunikationssitzung, wobei der neue Teilnehmer (24, 26, 28) mit einem oder mehreren unterschiedlichen, eingerichteten Teilnehmerprofilen (18) assoziiert ist; und
Auswählen eines der ein oder mehreren unterschiedlichen eingerichteten Teilnehmerprofile (18), die dem Gruppenprofilidentifikator entsprechen.

10. Verfahren nach Anspruch 1, das weiter Folgendes aufweist:
Empfangen eines Gruppenkommunikationssitzungsprofilidentifikators;
Einrichten der Gruppenkommunikationssitzung;
wobei das Auswählen des Urheberprofils (18) aus der Vielzahl (16) von unterschiedlichen eingerichteten Urheberprofilen (18), das angezeigt werden soll, weiter Auswählen eines der Vielzahl (16) unterschiedlicher eingerichteter Urheberprofile (18) aufweist, das dem Gruppenprofilidentifikator entspricht.

11. Verfahren nach Anspruch 1, das weiter Folgendes aufweist:
Einrichten der Gruppenkommunikationssitzung; und
dynamisches Ändern des jeweiligen Urheberprofils (18), das ausgewählt ist, um während der Gruppenkommunikationssitzung angezeigt zu werden.

12. Ein Computerprogrammprodukt zum Einrichten einer Gruppenkommunikationssitzung, das Folgendes aufweist:
ein computerlesbares Medium, das Folgendes aufweist:
wenigstens einen Befehl, der betriebsmäßig einen Computer zu veranlasst, eine Anfrage von einem Veranlasser bzw. Urheber (22) zum Initiieren einer Gruppenkommunikationssitzung zu empfangen, wobei die Anfrage eine Vielzahl von Teilnehmern (24, 26, 28) identifiziert; und
wenigstens einen Befehl, der betriebsmäßig einen Computer zu veranlasst, ein jeweiliges Urheberprofil (18) aus einer Vielzahl (16) unterschiedlicher, eingerichteter Urheberprofile (18) auszuwählen, das jedem der Vielzahl von Teilnehmern (24, 26, 28) angezeigt werden soll, wobei jedes der Vielzahl (16) unterschiedlicher eingerichteter Urheberprofile (18) mit einem einzelnen Nutzerkonto (20) assoziiert ist, **dadurch gekennzeichnet, dass**:
sich ein erstes ausgewähltes Urheberprofil (18), das einem ersten der Vielzahl von Teilnehmern (24, 26, 28) angezeigt werden soll, von einem zweiten ausgewählten Urheberprofil (18) unterscheidet, das einem zweiten der Vielzahl von Teilnehmern (24, 26, 28) angezeigt werden soll.

13. Eine Vorrichtung zum Einrichten einer Gruppenkommunikationssitzung, die Folgendes aufweist:
Mittel zum Empfangen einer Anfrage von einem Veranlasser bzw. Urheber (22) zum Initiieren einer Gruppenkommunikationssitzung, wobei die Anfrage eine Vielzahl von Teilnehmern (24, 26, 28) identifiziert; und
Mittel zum Auswählen eines jeweiligen Urheberprofils (18) aus einer Vielzahl (16) unterschiedlicher eingerichteter Urheberprofile (18), das jedem der Vielzahl von Teilnehmern (24, 26, 28) angezeigt werden soll, wobei jedes der Vielzahl (16) von unterschiedlichen eingerichteten Urheberprofilen (18) mit einem einzelnen Nutzerkonto (20) assoziiert ist,
**dadurch gekennzeichnet, dass**
sich ein erstes ausgewähltes Urheberprofil (18), das einem ersten der Vielzahl von Teilnehmern (24, 26, 28) angezeigt werden soll, von einem zweiten ausgewählten Urheberprofil (18) unterscheidet, dass einem zweiten der Vielzahl von Teilnehmern (24, 26, 28) angezeigt werden soll.

14. Eine Vorrichtung nach Anspruch 13, wobei die Vorrichtung wenigstens einen Prozessor zum Einrichten einer Gruppenkommunikationssitzung aufweist, der Folgendes aufweist:
ein erstes Modul zum Empfangen einer Anfrage von einem Urheber (22) zum Initiieren einer Gruppenkommunikationssitzung, wobei die Anfrage eine Vielzahl von Teilnehmern (24, 26, 28) identifiziert; und
ein zweites Modul zum Auswählen eines jeweiligen Urheberprofils (18) aus einer Vielzahl (16) unterschiedlicher eingerichteter Urheberprofile (18), die jedem der Vielzahl von Teilnehmern (24, 26, 28) angezeigt werden sollen, wobei jedes der Vielzahl (16) unterschiedlicher eingerichteter Urheberprofile (18) mit einem einzelnen Nutzerkonto (20) assoziiert ist.

15. Eine Vorrichtung nach Anspruch 13, wobei die Vorrichtung einen Gruppenkommunikationsserver zum Einrichten einer Gruppenkommunikationssitzung aufweist, der Folgendes aufweist:
einen Gruppenkommunikationsmanager zum Empfangen einer Anfrage von einem Urheber (22) zum Initiieren einer Gruppenkommunikationssitzung, wobei die Anfrage eine Vielzahl von Teilnehmern (24, 26, 28) identifiziert; und
ein Profilbestimmungselement zum Auswählen eines jeweiligen Urheberprofils (18) aus einer Vielzahl (16) unterschiedlicher eingerichteter Urheberprofile (18), das jedem der Vielzahl von Teilnehmern (24, 26, 28) angezeigt werden soll, wobei jedes der Vielzahl (16) unterschiedlicher eingerichteter Urheberprofile (18) mit einem einzelnen Nutzerkonto (20) assoziiert ist.

## Revendications

1. Procédé pour établir une session de communication de groupe, comprenant :
recevoir une requête à partir d'un initiateur (22) pour initier une session de communication de groupe, la requête identifiant une pluralité de participants (24, 26, 28) ; et
sélectionner un profil d'initiateur (18) respectif parmi une pluralité (16) de profils d'initiateurs (18) établis différents à afficher au niveau de chacun de la pluralité de participants (24, 26, 28), chacun de la pluralité (16) de profils d'initiateurs (18) établis différents étant associé à un seul compte d'utilisateur (20),
**caractérisé en ce que** :
un premier profil d'initiateur (18) sélectionné pour être affiché à un premier de la pluralité de participants (24, 26, 28) diffère d'un deuxième profil d'initiateur (18) sélectionné pour être affiché à un deuxième de la pluralité de participants (24, 26, 28).

2. Procédé selon la revendication 1, dans lequel la sélection du profil d'initiateur respectif (18) à afficher à chacun de la pluralité de participants (24, 26, 28) comprend une sélection basée sur une catégorie de contacts associée à chaque participant (24, 26, 28).

3. Procédé selon la revendication 1, dans lequel la sélection du profil d'initiateur respectif (18) à afficher à chacun de la pluralité de participants (24, 26, 28) comprend une sélection basée sur un type d'application correspondant à la session de communication de groupe.

4. Procédé selon la revendication 1, dans lequel la sélection du profil d'initiateur respectif (18) à afficher à chacun de la pluralité de participants (24, 26, 28) est basée sur une identification de dispositif d'un dispositif que l'initiateur (22) utilise pour la session de communication de groupe.

5. Procédé selon la revendication 1, dans lequel la sélection du profil d'initiateur respectif (18) à afficher à chacun de la pluralité de participants (24 26, 28) comprend une sélection basée sur une ou plusieurs règles de profil (34) correspondant à l'unique compte d'utilisateur (20).

6. Procédé selon la revendication 1, comprenant en outre :
obtenir un profil de participant (18) parmi une pluralité (16) de profils de participants (18) établis différents pour chaque participant (24, 26, 28) à afficher à l'initiateur (22) et d'autres de la pluralité de participants (24, 26, 28),
dans lequel, pour au moins un participant (24, 26, 28), un premier profil de participant (18) sélectionné à afficher à un premier de l'initiateur (22) ou des autres de la pluralité de participants (24, 26, 28) diffère d'un deuxième profil de participant (18) sélectionné à afficher à un deuxième de l'initiateur (22) ou des autres de la pluralité de participants (24, 26, 28).

7. Procédé selon la revendication 1, comprenant en outre :
établir la session de communication de groupe ;
recevoir une requête pour ajouter un nouveau participant (24, 26, 28) après l'établissement de la session de communication de groupe ;
envoyer une requête de sélection de profil à au moins l'un de l'initiateur (22) ou de la pluralité de participants (24, 26, 28), la requête de sélection de profil demandant une identification de l'un de la pluralité de profils d'initiateurs (18) établis différents ou de l'un de la pluralité de profils de participants (18) différents à afficher au nouveau participant (24, 26, 28) ; et
recevoir une sélection de profil à partir d'au moins l'un de l'initiateur (22) ou de la pluralité de participants (24, 26, 28), la sélection de profil incluant l'un identifié de la pluralité de profils d'initiateurs (18) établis différents ou de l'un identifié de la pluralité de profils de participants (18) différents à afficher au nouveau participant (24, 26, 28).

8. Procédé selon la revendication 1, comprenant en outre :
établir la session de communication de groupe ;
recevoir une requête pour ajouter un nouveau participant (24, 26, 28) après l'établissement de la session de communication de groupe, le nouveau participant (24, 26, 28) étant associé à un ou plusieurs profils de participants (18) établis différents ;
envoyer une requête de sélection de profil au nouveau participant (24, 26, 28), la requête de sélection de profil demandant une identification de l'un desdits un ou plusieurs profils de participants (18) établis différents à afficher à d'autres participants (24, 26, 28) dans la session de communication de groupe ; et
recevoir une sélection de profil à partir d'un nouveau participant (24, 26, 28), la sélection de profil comprenant l'un identifié desdits un ou plusieurs profils de participants (18) établis différents à afficher à d'autres participants (24, 26, 28) dans la session de communication de groupe.

9. Procédé selon la revendication 1, comprenant en outre :
recevoir un identificateur de profil de session de communication de groupe ;
établir la session de communication de groupe ;
recevoir une requête pour ajouter un nouveau participant (24, 26, 28) après l'établissement de la session de communication de groupe, le nouveau participant (24, 26, 28) étant associé à un ou plusieurs profils de participants (18) établis différents ; et
sélectionner l'un desdits un ou plusieurs profils de participants (18) établis différents qui correspond à l'identificateur de profil de groupe.

10. Procédé selon la revendication 1, comprenant en outre :
recevoir un identificateur de profil de session de communication de groupe ;
établir la session de communication de groupe ;
dans lequel la sélection du profil d'initiateur (18) parmi la pluralité (16) de profils d'initiateurs (18) établis différents à afficher comprend en outre la sélection de l'un de la pluralité (16) de profils d'initiateurs (18) établis différents qui correspond à l'identificateur de profil de groupe.

11. Procédé selon la revendication 1, comprenant en outre :
établir la session de communication de groupe ; et
changer dynamiquement le profil d'initiateur (18) respectif sélectionné pour être affiché pendant la session de communication de groupe.

12. Produit programme d'ordinateur pour établir une session de communication de groupe, comprenant :
un support lisible par un ordinateur, comprenant :
au moins une instruction actionnable pour amener un ordinateur à recevoir une requête provenant d'un initiateur (22) pour initier une session de communication de groupe, la requête identifiant une pluralité de participants (24, 26, 28) ; et
au moins une instruction actionnable pour amener l'ordinateur à sélectionner un profil d'initiateur (18) respectif parmi une pluralité (16) de profils d'initiateurs (18) établis différents à afficher à chacun de la pluralité de participants (24, 26, 28), chacun de la pluralité (16) de profils d'initiateurs (18) établis différents étant associé à un seul compte d'utilisateur (20), **caractérisé en ce que** :
un premier profil d'initiateur (18) sélectionné pour être affiché à un premier de la pluralité de participants (24, 26, 28) diffère d'un deuxième profil d'initiateur (18) sélectionné pour être affiché à un deuxième de la pluralité de participants (24, 26, 28).

13. Appareil pour établir une session de communication de groupe, comprenant :
des moyens pour recevoir une requête à partir d'un initiateur (22) pour initier une session de communication de groupe, la requête identifiant une pluralité de participants (24, 26, 28) ; et
des moyens pour sélectionner un profil d'initiateur respectif (18) parmi une pluralité (16) de profils d'initiateurs (18) établis différents à afficher à chacun de la pluralité de participants (24, 26, 28), chacun de la pluralité (16) de profils d'initiateurs (18) établis différents étant associé à un seul compte d'utilisateur (20),
**caractérisé en ce que** :
un premier profil d'initiateur (18) sélectionné pour être affiché à un premier de la pluralité de participants (24, 26, 28) diffère d'un deuxième profil d'initiateur (18) sélectionné pour être affiché à un deuxième de la pluralité de participants (24, 26, 28).

14. Appareil selon la revendication 13, l'appareil comprenant au moins un processeur pour établir une session de communication de groupe, comprenant :
un premier module pour recevoir une requête à partir d'un initiateur (22) pour initier une session de communication de groupe, la requête identifiant une pluralité de participants (24, 26, 28) ; et
un deuxième module pour sélectionner un profil d'initiateur (18) respectif parmi une pluralité (16) de profils d'initiateurs (18) établis différents à afficher au niveau de chacun de la pluralité de participants (24, 26, 28), chacun de la pluralité (16) de profils d'initiateurs (18) établis différents étant associé à un seul compte d'utilisateur (20).

15. Appareil selon la revendication 13, l'appareil comprenant un serveur de communication de groupe pour établir une session de communication de groupe, comprenant :
un gestionnaire de communication de groupe pour recevoir une requête à partir d'un initiateur (22) pour initier une session de communication de groupe, la requête identifiant une pluralité de participants (24, 26, 28) ; et
un dispositif de détermination de profil pour sélectionner un profil d'initiateur (18) respectif parmi une pluralité (16) de profils d'initiateurs (18) établis différents à afficher à chacun de la pluralité de participants (24, 26, 28), chacun de la pluralité (16) de profils d'initiateurs (18) établis différents étant associé à un seul compte d'utilisateur (20).
